# FASCICULE DE BREVET EUROPEEN

(11) **EP 3 742 249 B1**
(45) Date de publication et mention de la délivrance du brevet: **29.12.2021**
(21) Numéro de dépôt: 20168264.8
(22) Date de dépôt: 06.04.2020
(51) Int. Cl.: G05D 1/10, G05D 1/00

(54) **PROCÉDÉ ET SYSTÈME SÉCURISÉ DE CONTRÔLE D'UNE POSITION D'UN AÉRONEF VIS-A-VIS DU DOMAINE DE VOL AUTORISÉ**
VERFAHREN UND GESICHERTES SYSTEM FÜR POSITIONSKONTROLLE EINES LUFTFAHRZEUGS IN BEZUG AUF EIN GENEHMIGTES FLUGGEBIET
METHOD AND SECURE SYSTEM FOR CONTROLLING A POSITION OF AN AIRCRAFT WITH RESPECT TO THE FIELD OF AUTHORISED FLIGHT

(30) Priorité: 23.04.2019 FR 1904264
(43) Date de publication de la demande: 25.11.2020
(73) Titulaire: Airbus Helicopters, 13725 Marignane Cedex (FR)
(72) Inventeur: THOMASSEY, Lionel, 13270 FOS SUR MER (FR)
(74) Mandataire: GPI Brevets

(56) Documents cités:
- EP-A1- 3 361 344
- US-A- 4 105 900
- US-A1- 2016 244 161

## Description

La présente invention relève du domaine des aéronefs et plus particulièrement des dispositifs de contrôle de l'attitude et de la hauteur de vol d'un aéronef, notamment d'un drone.

La présente invention concerne un procédé sécurisé de contrôle d'une position d'un aéronef vis-à-vis du domaine de vol autorisé et un système sécurisé de contrôle d'une position d'un aéronef vis-à-vis du domaine de vol autorisé. La présente invention concerne également un ensemble sécurisé de contrôle d'une position d'un aéronef vis-à-vis d'un domaine de vol autorisé ainsi qu'un aéronef comportant un tel système. La présente invention est en particulier applicable sur des drones.

L'utilisation des drones, désignés également par l'acronyme « *UAV* » pour la désignation en langue anglaise « Unmanned Aerial Vehicle », s'est beaucoup développée ces dernières années. En conséquence, le trafic des drones est susceptible de devenir important notamment dans les zones urbaines ou périurbaines.

Afin de limiter les risques de collision entre un drone et un autre aéronef, un système de gestion de l'espace aérien dédié aux drones et désigné par l'acronyme « *UTM* » pour la désignation en langue anglaise « Unmanned aircraft system Traffic Management » est à l'étude au même titre que le système de gestion de l'espace aérien existant dédié aux avions évoluant en zone contrôlée et désigné par l'acronyme « *ATM* » pour la désignation en langue anglaise « Aircraft Traffic Management ». L'espace aérien dédié aux drones est par exemple limité à des hauteurs de vol par rapport à un sol de référence inférieures à 500 pieds, un pied étant égal à 0.3048 mètre, alors que l'espace aérien dédié aux avions est situé à des hauteurs de vol par rapport au sol supérieures ou égales à 500 pieds. Dans le cadre de ce texte, on entend par « hauteur de vol » d'un aéronef la distance mesurée verticalement entre l'aéronef et un sol de référence lorsque l'aéronef survole le sol. On entend aussi par « hauteur de vol » d'un aéronef son altitude lorsque l'aéronef survole la mer.

Afin de rester dans l'espace aérien autorisé par le système de gestion *UTM,* un drone comporte généralement un dispositif de contrôle de sa hauteur de vol. Cependant, des drones quittent parfois leur espace aérien dédié pour se retrouver dans l'espace aérien dédié aux avions suite à une panne du dispositif de contrôle de la hauteur de vol ou à une perte d'une consigne de hauteur de vol maximale correspondant au plafond de vol du drone, ou encore à cause d'une grosse rafale de vent par exemple.

En outre, un drone est sujet à un risque d'écrasement au sol lorsque le drone prend une attitude correspondant à des angles d'assiettes importants et ne parvient pas ensuite à retrouver une attitude sensiblement horizontale. En effet, d'autres fonctions, notamment le déploiement d'un parachute ou d'un coussin gonflable, peuvent être déclenchées de façon fiable uniquement avec une attitude sensiblement horizontale du drone.

Des drones en service à ce jour sont en effet pilotés par un contrôleur de vol dit « simplex », à savoir non redondé, et connecté à une seule centrale inertielle, voire à plusieurs centrales inertielles.

Afin de limiter les risques d'accidents, le contrôleur de vol d'un drone tend à posséder aujourd'hui un niveau de sécurisation important et quantifié par un niveau de criticité désigné par l'acronyme « *DAL* », pour la désignation en langue anglaise « Design Assurance Level », plus ou moins élevé en fonction des dispositifs de sécurisation qu'il comporte.

Cependant, des centrales inertielles non certifiées peuvent être raccordées à un contrôleur de vol indépendamment de son niveau de criticité *DAL.* De telles centrales inertielles peuvent limiter l'amélioration de la sécurisation apportée par un contrôleur de vol sécurisé.

En outre, l'art antérieur comporte de nombreux équipements permettant de déterminer les orientations et/ou les mouvements d'un véhicule, en particulier un aéronef, ainsi que des dispositifs d'aide à la navigation de ces véhicules.

Par exemple, le document FR 1525230 décrit un dispositif de stabilisation et un détecteur de la verticale apparente permettant de stabiliser une plateforme mobile en rotation autour d'un axe de sorte que cette plateforme reste perpendiculaire à la verticale apparente. Le détecteur de la verticale apparente comporte un pendule oscillant, une roue à inertie tournant autour d'un axe solidaire du pendule et un moyen d'accouplement angulaire à glissement générant un couple de freinage et agencé entre cet axe et la roue à inertie. Le dispositif de stabilisation comporte un circuit d'asservissement, un moteur électrique et un train d'engrenages entraînant en rotation la plateforme mobile afin d'effectuer cette stabilisation.

Le document EP 3361344 décrit un système de pilotage pour aéronef, notamment un drone, comportant plusieurs jeux de senseurs, redondants et indépendants, plusieurs voies de calcul, redondantes et indépendantes, et un superviseur. Les jeux de senseurs sont destinés à évaluer la position et les mouvements de l'aéronef, chaque voie de calcul étant reliée aux senseurs d'un jeu de senseurs. Le superviseur couple une seule voie de calcul aux organes de vol de l'aéronef et découple cette voie de calcul lorsqu'un comportement courant de l'aéronef est différent d'un comportement prédictif prédéterminé.

Enfin, le document US 1372184 décrit un dispositif de détection et de mesure de la vitesse angulaire d'un bateau autour d'un axe, en supprimant les perturbations des mouvements autour d'autres axes. Ce dispositif comporte deux gyroscopes, un mécanisme différentiel et un dispositif de compensation. Les deux gyroscopes sont en rotation selon des sens opposés et combinent leurs mouvements de basculement au moyen du mécanisme différentiel. Le dispositif de compensation neutralise quant à lui les forces de perturbation non éliminées par le mécanisme différentiel. Ce bateau n'appartient pas de fait au domaine technique de l'invention.

L'art antérieur comporte aussi des dispositifs permettant de déterminer la pression atmosphérique, notamment pour estimer l'altitude barométrique ou bien la hauteur de vol d'un aéronef. Par exemple, un baromètre à mercure comporte un tube en forme de U fermé à une extrémité et ouvert à l'autre extrémité. Le tube contient du mercure et un gaz confiné à l'extrémité fermée du tube. Le mercure se déplace selon les variations de la pression atmosphérique de l'atmosphère environnante.

Il existe également des baromètres à gaz ne comportant pas de mercure. La pression atmosphérique est mesurée à l'aide d'un volume de gaz enfermé qui se comprime ou se détend en fonction de la pression atmosphérique.

L'arrière plan technologique de l'invention comporte également les documents US 2016/0244161 et US 4105900.

Par ailleurs, un drone peut comporter des fonctions de secours, dites également « back-up » en langue anglaise, pour la stabilisation des angles d'assiettes du drone en roulis et en tangage et pour la limitation de son plafond de vol. Ces fonctions sont souvent réalisées par un logiciel, sans ou avec redondance, mais sensible à beaucoup de perturbations de toutes sortes.

Les limitations de la technique antérieure dans le domaine des drones sont donc de plusieurs ordres. Notamment, le niveau de sécurisation d'un drone peut être assuré par l'utilisation de plusieurs contrôleurs de vol redondants, dissimilaires et surveillés par un superviseur afin de pallier des pannes électriques ou électroniques. Toutefois, en cas de problèmes logiciels ou bien d'un brouillage électronique notamment, la fonction garantissant le respect du plafond de vol peut ne plus être fonctionnelle et/ou fiable, conduisant éventuellement le drone à entrer dans l'espace aérien des avions ou tout simplement de sortir de sa zone de vol autorisée.

La présente invention a alors pour objet un procédé sécurisé de contrôle d'une position d'un aéronef vis-à-vis d'un domaine de vol autorisé ainsi qu'un système sécurisé de contrôle d'une position d'un aéronef vis-à-vis du domaine de vol autorisé permettant de s'affranchir des limitations mentionnées ci-dessus.

Le domaine de vol autorisé d'un aéronef, et d'un drone en particulier, peut être limité d'une part par un plafond de vol, à savoir par une limitation d'une hauteur de vol de l'aéronef et, d'autre part par une attitude de consigne établie par une limitation des angles d'assiettes du drone autour de ses axes de roulis et de tangage, ainsi qu'éventuellement une limitation des vitesses angulaires du drone, en particulier autour de son axe de lacet.

Selon la présente invention, un procédé sécurisé de contrôle d'une position d'un aéronef vis-à-vis d'un domaine de vol autorisé comporte les étapes suivantes :
- mesure d'une première valeur d'au moins une caractéristique de vol de l'aéronef par l'intermédiaire d'une chaîne principale de mesure de l'aéronef, ladite au moins une caractéristique de vol étant exploitée par un système de contrôle de vol de l'aéronef pour piloter automatiquement l'aéronef dans le domaine de vol autorisé,
- émission d'au moins un signal analogique fonction de ladite au moins une caractéristique de vol de l'aéronef par l'intermédiaire d'une chaîne de mesure de secours analogique de l'aéronef,
- application d'un premier mode de pilotage automatique de l'aéronef réalisé par défaut par le système de contrôle de vol en exploitant ladite première valeur d'au moins une caractéristique de vol de l'aéronef pour piloter automatiquement l'aéronef, et
- application d'un deuxième mode de pilotage automatique de l'aéronef réalisé par le système de contrôle de vol en exploitant ledit au moins un signal analogique pour piloter automatiquement l'aéronef dès qu'au moins une de ladite au moins une caractéristique de vol de l'aéronef dépasse une limite prédéterminée, ou bien dès qu'au moins une différence entre une première valeur d'une caractéristique de vol et une seconde valeur de ladite caractéristique de vol déterminée à partir d'un signal analogique est supérieure ou égale à une valeur prédéterminée prédéterminée, afin de maintenir ou ramener l'aéronef dans le domaine de vol autorisé.

L'aéronef est par exemple un drone comportant au moins un rotor de sustentation, et en particulier un drone multirotor, à savoir comportant plusieurs rotors de sustentation.

Les caractéristiques de vol de l'aéronef comportent notamment l'attitude de l'aéronef, à savoir les angles d'assiettes de l'aéronef autour de ses axes de roulis et de tangage, et/ou sa position, en particulier sa hauteur de vol et/ou éventuellement les vitesses angulaires de l'aéronef autour de ses axes de roulis, de tangage et de lacet. Les caractéristiques de vol peuvent aussi comporter les variations des angles d'assiettes, des vitesses angulaires et/ou de la hauteur de vol de l'aéronef.

Par défaut, le système de vol de l'aéronef exploite ladite première valeur de chaque caractéristique de vol mesurée par une chaîne principale de mesure pour piloter automatiquement l'aéronef, en particulier lors d'un fonctionnement sans panne et/ou sans dysfonctionnement de l'aéronef.

Un aéronef peut comporter plusieurs chaînes principales de mesure fonctionnant de façon redondante afin de pallier d'éventuelles pannes et/ou dysfonctionnements. Un aéronef peut aussi comporter plusieurs chaînes principales de mesure fonctionnant en parallèle. Des valeurs médianes des caractéristiques de vol sont alors déterminées à partir des mesures de ces chaînes principales de mesure ou bien un voteur détermine ces caractéristiques de vol selon des méthodes usuelles.

Une chaîne principale de mesure de l'aéronef comporte par exemple une ou plusieurs centrales inertielles ainsi qu'un ou plusieurs accéléromètres. Une chaîne principale de mesure peut être une chaîne de mesure numérique.

Un système ou un procédé numérique utilise et traite des grandeurs physiques représentées au moyen de chiffres ou de signaux à valeurs discrètes d'une grandeur physique. Un système ou un procédé numérique peut en particulier utiliser un programme informatique ou bien un microprocesseur ou équivalent pour traiter les données manipulées. Un système ou un procédé numérique est à opposer à un système ou à un procédé dit « analogique ».

Un système ou un procédé analogique utilise et traite des grandeurs physiques mesurées par une fonction continue ou représentées par un signal dont les variations sont continues, par exemple une tension électrique. En outre, un système ou un procédé analogique peut traiter les données manipulées sans utiliser de langage programmable, de programme informatique ni de logiciel ainsi qu'aucun microprocesseur.

A ce titre, un système numérique est beaucoup plus sensible qu'un système analogique à diverses perturbations, telles qu'une panne électrique ou électronique ou bien une erreur informatique, consécutives par exemple à une perturbation électromagnétique ou bien à un brouillage électronique, voire à une erreur de calcul ou une simple erreur de saisie.

Dès lors, l'invention comporte une étape d'émission d'au moins un signal analogique effectuée par une chaîne de mesure de secours analogique pour effectuer une mesure de secours d'au moins une des caractéristiques de vol, voire de la totalité des caractéristiques de vol utilisées par le système de vol. Une chaîne de mesure de secours permet de pallier une panne ou un dysfonctionnement de la chaîne principale de mesure de l'aéronef ou bien des chaînes principales de mesure le cas échéant.

Dans le cadre de l'invention, une chaîne de mesure de secours est une chaîne analogique avantageusement peu sensible et plus tolérante, aux perturbations électromagnétiques, à un brouillage électronique, à une erreur ou une panne informatique.

Bien qu'étant présent dans l'aéronef principalement pour pallier une défaillance de la ou des chaînes principales de mesure, une chaîne de mesure de secours fournit, de façon continue et parallèlement à la ou aux chaînes principales de mesure, au moins un signal analogique fonction d'au moins une caractéristique de vol également mesurée par la ou les chaîne principale de mesure.

En outre, un aéronef peut comporter plusieurs chaînes de mesure de secours fonctionnant de façon redondante afin de pallier d'éventuelles pannes et/ou défaillances. Un aéronef peut aussi comporter plusieurs chaînes de mesure de secours fonctionnant en parallèle, des valeurs médianes des caractéristiques de vol étant déterminées ou bien un voteur déterminant au moins une caractéristique de vol à partir des signaux analogiques fournis par les chaînes de mesure de secours.

Par ailleurs, un système de contrôle de vol de l'aéronef peut exploiter les caractéristiques de vol de l'aéronef considérées comme les plus fiables parmi celles fournies par l'intermédiaire d'au moins une chaîne principale de mesure et d'au moins une chaîne de mesure de secours afin de réaliser le pilotage automatique de l'aéronef de façon fiable et sécurisée.

Ainsi, le premier mode de pilotage automatique de l'aéronef est par défaut effectué par le système de contrôle de vol en exploitant une première valeur d'au moins une caractéristique de vol mesurée par une chaîne principale de mesure.

Cependant, dès qu'une situation potentiellement dangereuse ou bien dès qu'un risque de perturbation de la mesure opérée par une chaîne principale de mesure est identifié, le système de contrôle de vol met en œuvre le deuxième mode de pilotage automatique de l'aéronef en exploitant avantageusement le au moins un signal analogique émis par une chaîne de mesure de secours afin de réaliser de façon sûre le pilotage automatique de l'aéronef, éventuellement jusqu'à un atterrissage d'urgence si nécessaire. Le procédé selon l'invention constitue ainsi avantageusement un procédé de contrôle renforcé et sécurisé d'un domaine de vol autorisé d'un aéronef exploitant avantageusement des caractéristiques de vol considérées comme fiables et non perturbées pour réaliser le deuxième mode de pilotage automatique de l'aéronef.

Le deuxième mode de pilotage automatique peut notamment être réalisé lorsque l'aéronef se rapproche d'une limite de son domaine de vol autorisé, voire sort de ce domaine de vol autorisé. Cette condition est identifiée lorsqu'au moins une caractéristique de vol de l'aéronef dépasse une limite prédéterminée de ce domaine de vol autorisé. Ainsi, dès qu'une caractéristique de vol de l'aéronef dépasse une limite prédéterminée du domaine de vol autorisé de l'aéronef, le procédé selon l'invention bascule du premier mode de pilotage automatique vers le deuxième mode de pilotage automatique.

Les limites prédéterminées de ce domaine de vol autorisé peuvent prendre en compte une marge de sécurité vis-à-vis des limites réelles du domaine de vol autorisé de l'aéronef afin notamment d'anticiper la sortie de l'aéronef du domaine de vol autorisé. Une limite réelle du domaine de vol autorisé est par exemple un plafond de vol et/ou une attitude de consigne définis par exemple par des règlements aéronautiques ou bien les limitations structurales de l'aéronef.

Les caractéristiques de vol comparées avec les limites prédéterminées d'un domaine de vol autorisé peuvent être fournies par une chaîne principale de mesure ou bien par une chaîne de mesure de secours.

Les caractéristiques de vol fournies par une chaîne principale de mesure et par une chaîne de mesure de secours peuvent aussi être comparées simultanément avec les limites prédéterminées du domaine de vol autorisé. Dans ce cas, dès qu'au moins une caractéristique de vol mesurée par une chaîne principale de mesure ou bien par une chaîne de mesure de secours dépasse au moins une limite prédéterminée du domaine de vol autorisé, la ou les chaînes principales de mesure sont ignorées et une ou plusieurs chaînes de mesure de secours sont prises en compte pour le pilotage automatique de l'aéronef.

Le procédé selon l'invention peut également lors du deuxième mode de pilotage automatique piloter avantageusement un rétablissement de l'attitude de l'aéronef en dessous de la limite prédéterminée et/ou peut assurer le respect du plafond de vol de l'aéronef en cas de dépassement du domaine autorisé.

Par exemple, l'aéronef comportant au moins un rotor de sustentation entraîné en rotation par un moteur électrique, le deuxième mode de pilotage automatique peut comporter une sous-étape de commande d'un boîtier de contrôle commandant chaque moteur électrique par l'intermédiaire d'au moins un signal analogique afin d'alimenter électriquement chaque moteur électrique entraînant un rotor de sustentation. Ce signal analogique est par exemple une tension électrique.

Le boîtier de contrôle désigné par l'acronyme « *ESC* » pour la désignation en langue anglaise « Electronic Speed Control » est relié à au moins un moteur électrique. Le signal analogique est ainsi utilisé directement au cours du deuxième mode de pilotage automatique par le boîtier de contrôle ESC afin d'alimenter électriquement chaque moteur électrique. De la sorte, l'aéronef descend à vitesse contrôlée grâce à la variation de cette tension électrique représentant notamment la hauteur de vol jusqu'à atteindre une hauteur de vol sensiblement égale à la limite prédéterminée, puis l'aéronef se stabilise automatiquement grâce à cette tension électrique à la hauteur de vol sensiblement égale à cette limite prédéterminée.

En outre, le basculement entre le premier mode de pilotage automatique et le deuxième mode de pilotage automatique s'effectue avantageusement en cas de proximité des limites du domaine de vol autorisé et non sur une analyse de l'état de fonctionnement de la chaine principale de mesure.

Le deuxième mode de pilotage automatique peut aussi être réalisé suite à une comparaison d'une ou plusieurs caractéristiques de vol mesurées par une chaîne principale de mesure avec cette ou ces mêmes caractéristiques de vol fournies par au moins une chaîne de mesure de secours lorsqu'un un écart significatif entre elles est détecté, en particulier un écart supérieur ou égal à la valeur prédéterminée.

En effet, un tel écart significatif supérieur ou égal à la valeur prédéterminée permet d'identifier la présence possible d'un défaut ou d'une panne sur la chaîne principale de mesure. De la sorte, le procédé selon l'invention limite avantageusement le risque que le système de contrôle de vol exploite des caractéristiques de vol dont la fiabilité et la précision ne sont pas garanties pour le pilotage automatique de l'aéronef. L'utilisation d'un signal analogique par le procédé selon l'invention pour une solution « back-up » apporte une couche de sécurisation et de la disponibilité supplémentaires des systèmes de l'aéronef.

Le procédé selon l'invention permet ainsi avantageusement de détecter et de pallier d'une part un risque de sortie du domaine de vol autorisé et d'autre part une potentielle défaillance de la chaîne de mesure principale de l'aéronef.

La comparaison d'au moins une caractéristique de vol avec une limite prédéterminée du domaine de vol ou bien avec une autre valeur de cette caractéristique de vol peut être faite de façon numérique. Le signal analogique émis par une chaîne de mesure de secours est alors transformé en une seconde valeur numérique de façon usuelle, par exemple par un convertisseur analogique/numérique.

La comparaison d'au moins une caractéristique de vol avec une limite prédéterminée du domaine de vol ou bien avec une autre valeur de cette caractéristique de vol peut aussi être faite de façon analogique. Une première valeur d'au moins une caractéristique de vol mesurée par une chaîne principale de mesure numérique est alors transformée de façon usuelle en un signal analogique, par exemple par un convertisseur numérique/analogique. Le signal analogique peut ainsi être utilisé directement tel qu'émis par la chaîne de mesure de secours.

La hauteur de vol de l'aéronef peut être une caractéristique de vol de l'aéronef. La hauteur de vol est par exemple mesurée par comparaison d'une pression atmosphérique courante avec une pression de référence dans une chaîne de mesure de secours analogique. La pression de référence correspond par exemple à la pression atmosphérique de l'air au niveau de l'aire de décollage de l'aéronef.

L'étape d'émission peut comporter alors les étapes suivantes :
- variation d'une résistance électrique en fonction d'une différence entre la pression atmosphérique extérieure à l'aéronef et la pression de référence, et
- génération d'un signal analogique proportionnel à la résistance électrique et, de fait, fonction de la hauteur de vol de l'aéronef vis-à-vis du sol de référence.

L'attitude de l'aéronef peut également être prise en compte par le biais d'une caractéristique de vol de type angles d'assiettes. Les variations des angles d'assiettes de l'aéronef peuvent par exemple être déterminées respectivement par l'intégration de vitesses angulaires mesurées autour des axes de tangage et de roulis. Cette intégration est par exemple réalisée de façon analogique, typiquement par un amplificateur opérationnel. Cette intégration peut aussi être réalisée de façon numérique.

Une chaîne de mesure de secours analogique de l'aéronef comporte par exemple plusieurs gyromètres à gyroscope munis chacun d'un premier dispositif de mesure fournissant un signal analogique permettant de déterminer une vitesse angulaire et d'en déduire une attitude.

L'étape d'émission peut alors comporter les étapes suivantes :
- génération d'au moins deux signaux analogiques par au moins deux gyromètres à gyroscope agencés respectivement selon les axes de tangage et de roulis,
- détermination de vitesses angulaires de l'aéronef autour des axes de tangage et de roulis à partir des au moins deux signaux analogiques, et
- détermination des angles d'assiettes par intégration des vitesses angulaires.

De plus, une chaîne de mesure de secours analogique de l'aéronef peut comporter deux pendules oscillant librement respectivement autour des axes de tangage et de roulis et de part et d'autre d'une verticale apparente de l'aéronef. La verticale apparente de l'aéronef est une direction du poids apparent de l'aéronef et est définie de façon usuelle par une combinaison de l'accélération de l'aéronef et de l'accélération de la pesanteur terrestre.

En conséquence, une mesure des oscillations de chaque pendule par un second dispositif de mesure permet de déterminer un signal analogique proportionnel à un angle d'inclinaison du pendule vis-à-vis d'une verticale apparente de l'aéronef autour de l'axe d'oscillation de ce pendule, à savoir l'axe de tangage ou bien l'axe de roulis. Cet angle d'inclinaison du pendule est égal à un angle d'assiette de l'aéronef qui est ainsi avantageusement déterminée sans calcul, notamment sans opération d'intégration.

Par ailleurs, l'étape d'émission peut alors comporter les étapes suivantes :
- génération d'au moins deux signaux analogiques fonction respectivement des angles d'inclinaison d'au moins deux pendules par rapport à une verticale apparente de l'aéronef respectivement autour des axes de tangage et de roulis,
- détermination des angles d'inclinaison des pendules à partir des au moins deux signaux analogiques, et
- détermination des angles d'assiettes de l'aéronef respectivement autour des axes de tangage et de roulis égaux aux angles d'inclinaison des pendules.

Les angles d'assiettes de l'aéronef autour respectivement des axes de tangage et de roulis peuvent également être déterminés respectivement par hybridation des valeurs des intégrales des vitesses angulaires mesurées par des gyromètres à gyroscope et des valeurs des oscillations de pendules.

L'étape d'émission peut comporter les étapes suivantes :
- génération d'au moins deux signaux analogiques par au moins deux gyromètres à gyroscope agencés respectivement selon les axes de tangage et de roulis,
- détermination de vitesses angulaires de l'aéronef autour des axes de tangage et de roulis à partir des au moins deux signaux analogiques,
- génération d'au moins deux signaux analogiques fonction respectivement des angles d'inclinaison d'au moins deux pendules par rapport à une verticale apparente de l'aéronef respectivement autour des axes de tangage et de roulis, et
- détermination des angles d'inclinaison des pendules à partir des au moins deux signaux analogiques, et
- détermination des angles d'assiettes par hybridation d'une part des intégrales des vitesses angulaires de l'aéronef autour des axes de tangage et de roulis et d'autre part des angles d'inclinaison des pendules.

Par ailleurs, lors de l'étape d'émission, ledit au moins un signal analogique fourni par l'intermédiaire d'une chaîne de mesure de secours peut comporter au moins un signal analogique de pilotage et au moins un signal analogique de bascule. Un signal analogique de pilotage est ainsi dédié au deuxième mode de pilotage automatique de l'aéronef et un signal analogique de bascule est dédié à la comparaison d'une caractéristique de vol de l'aéronef vis à vis d'une limite prédéterminée du domaine de vol autorisé ou bien vis-à-vis d'une première valeur de cette caractéristique de vol.

Les deux pendules précédemment évoqués peuvent par exemple fournir respectivement un signal analogique de bascule et les gyromètres à gyroscope fournissent les signaux analogiques de pilotage. Le deuxième mode de pilotage automatique est réalisé dès qu'un angle d'inclinaison d'un des pendules, porté par un signal analogique de bascule, est supérieur à un premier seuil correspondant à une limite prédéterminée du domaine de vol autorisé.

Une limite prédéterminée peut également prendre en compte une notion de hauteur de vol et comporter par exemple un second seuil et une hauteur de vol critique, le second seuil étant inférieur au premier seuil. Par exemple, le deuxième mode de pilotage automatique est réalisé lorsque d'une part l'angle d'inclinaison d'un des pendules est supérieur au second seuil et d'autre part la hauteur de vol de l'aéronef est inférieure à une hauteur de vol critique.

Une limite prédéterminée peut également prendre en compte une valeur temporelle et comporter par exemple un seuil et une durée critique. Par exemple, le deuxième mode de pilotage automatique est réalisé lorsque d'une part une caractéristique de vol est supérieure à ce seuil et d'autre part si une durée nécessaire pour que cette caractéristique de vol de l'aéronef retrouve une valeur inférieure ou égale au seuil est supérieure à une durée critique.

Par exemple, cette caractéristique de vol étant la hauteur de vol, le deuxième mode de pilotage automatique est réalisé lorsque d'une part la hauteur de vol est supérieure à ce seuil et d'autre part si une durée nécessaire pour que l'aéronef retrouve une hauteur de vol inférieure ou égale au seuil est supérieure à une durée critique. De la sorte, le procédé selon l'invention tolère un dépassement momentané dans le temps du plafond de vol autorisé, la durée critique pouvant dépendre des performances de l'aéronef.

La présente invention a aussi pour objet un système sécurisé de contrôle d'une position d'un aéronef vis-à-vis d'un domaine de vol autorisé, l'aéronef comportant :
- au moins une chaîne principale de mesure mesurant une première valeur d'au moins une caractéristique de vol de l'aéronef, et
- un système de contrôle de vol assurant le pilotage automatique de l'aéronef en exploitant les caractéristiques de vol de l'aéronef.

Le système sécurisé de contrôle applique le procédé sécurisé de contrôle d'une position d'un aéronef vis-à-vis d'un domaine de vol autorisé précédemment décrit et comporte :
- au moins une chaîne de mesure de secours analogique fournissant au moins un signal analogique fonction de ladite au moins une caractéristique de vol de l'aéronef, et
- un dispositif de bascule configuré pour transmettre au système de contrôle de vol, par défaut au moins la première valeur d'au moins une caractéristique de vol et, une seconde valeur de cette au moins une caractéristique de vol déterminée à partir d'un signal analogique fournie par au moins une chaîne de mesure de secours analogique dès qu'au moins une caractéristique de vol dépasse une limite prédéterminée ou bien dès qu'au moins une différence entre la première valeur et la seconde valeur d'une caractéristique de vol est supérieure ou égale à une valeur prédéterminée.

Le dispositif de bascule comporte par exemple au moins un amplificateur opérationnel. Le dispositif de bascule peut par exemple être un circuit logique constituant un comparateur à hystérésis désigné également « trigger de Schmitt ».

De la sorte, le dispositif de bascule permet au système de contrôle de vol de basculer du premier mode de pilotage automatique vers le deuxième mode de pilotage automatique en fonction des caractéristiques de vol mesurées par au moins une chaîne principale de mesure et par au moins une chaîne de mesure de secours.

Une chaîne principale de mesure est de préférence numérique alors qu'une chaîne de mesure de secours est analogique.

Une chaîne de mesure de secours de l'aéronef peut comporter un premier système de mesure d'une altitude barométrique de l'aéronef. Ce premier système de mesure comporte par exemple une première chambre fermée contenant un fluide à une pression de référence, une seconde chambre en contact avec une atmosphère extérieure à l'aéronef et un piston agencée entre les deux chambres et se déplaçant lors d'une variation de la pression atmosphérique courante de l'atmosphère extérieure à l'aéronef.

La hauteur de vol de l'aéronef peut ainsi être déterminée par ce premier système de mesure par comparaison de la pression atmosphérique courante avec la pression de référence correspondant par exemple à la pression atmosphérique de l'air au niveau de l'aire de décollage de l'aéronef, cette pression de référence étant éventuellement réglable.

Le premier système de mesure peut également comporter un rhéostat ayant une borne mobile reliée à ce piston. Un déplacement du piston entraîne ainsi une variation d'au moins une résistance électrique du rhéostat. La résistance électrique du rhéostat varie alors en présence d'une variation de la pression atmosphérique courante, et par suite en fonction de la hauteur de vol de l'aéronef.

Le rhéostat est par exemple relié au dispositif de bascule afin de permettre le basculement du premier mode de pilotage automatique vers le deuxième mode de pilotage automatique en fonction de la variation de la résistance électrique du rhéostat. La valeur de la résistance électrique du rhéostat est par exemple comparée avec une valeur de consigne correspondant à une consigne de hauteur de vol maximale. Une tension électrique aux bornes de cette résistance électrique peut aussi être comparée avec une tension électrique de référence correspondant à cette consigne de hauteur de vol maximale.

Le premier système de mesure constitue dans ce cas une chaîne de mesure de secours analogique, la hauteur de vol de l'aéronef étant fournie par l'intermédiaire d'une valeur d'une résistance électrique ou d'une tension électrique variant de façon continue. De plus, le dispositif de bascule peut être dénué de tout calculateur et de logiciel. La comparaison peut par exemple se faire grâce à un ou plusieurs comparateurs à amplificateur opérationnel, transistors de bascule et/ou relais qui basculent en fonction de la valeur de la résistance électrique ou bien de la tension électrique aux bornes de cette résistance électrique.

L'aéronef comportant au moins un rotor de sustentation entraîné en rotation par un moteur électrique, le premier système de mesure peut par exemple fournir comme signal analogique une tension électrique à un boîtier de contrôle *ESC* relié à au moins un moteur électrique. Ce boîtier de contrôle ESC est par exemple intégré au système de contrôle de vol de l'aéronef. Le signal analogique est ainsi utilisée directement par le boîtier de contrôle ESC afin d'alimenter électriquement chaque moteur électrique et permet à l'aéronef tout d'abord de descendre à vitesse contrôlée grâce à la variation de cette tension électrique jusqu'à atteindre une hauteur de vol sensiblement égale à la limite prédéterminée, puis de se stabiliser automatiquement à la hauteur de vol sensiblement égale à cette limite prédéterminée.

Selon un aspect, une chaîne de mesure de secours de l'aéronef peut aussi comporter un second système de mesure des vitesses angulaires, des angles d'assiettes de l'aéronef et des angles d'inclinaison de l'aéronef par rapport à une verticale apparente de l'aéronef. Ce second système de mesure comporte par exemple au moins deux gyromètres à gyroscope et deux pendules.

Ce second système de mesure comporte éventuellement trois gyromètres à gyroscope afin de fournir comme caractéristiques de vol des valeurs des vitesses angulaires de l'aéronef respectivement autour de l'axe de tangage, de l'axe de roulis et de l'axe de lacet. Une intégration de ces vitesses angulaires permet de déterminer respectivement les angles d'assiettes et de lacet de l'aéronef ou bien leurs variations respectives.

Chaque pendule est agencé oscillant librement autour de l'axe de tangage ou de l'axe de roulis de l'aéronef. Chaque pendule oscille, lors des mouvements de l'aéronef, de part et d'autre d'une verticale apparente de l'aéronef. Les angles d'inclinaison des pendules représentent alors les angles d'assiettes de l'aéronef respectivement autour des axes de roulis et de tangage.

Les angles d'inclinaison des pendules peuvent être portés par des signaux analogiques de bascule utilisés uniquement par le système sécurisé de contrôle, et le dispositif de bascule en particulier, et dédiés à la comparaison des caractéristiques de vol de l'aéronef. Le système de contrôle de vol utilise alors les angles d'assiettes déterminés par intégration des vitesses angulaires fournies par les gyromètres à gyroscope pour le pilotage de l'aéronef.

Les angles d'inclinaison des pendules peuvent aussi être utilisés d'une part par le système sécurisé de contrôle pour la comparaison des caractéristiques de vol de l'aéronef et d'autre part par le système de contrôle de vol. Le système de contrôle de vol utilise ainsi les vitesses angulaires fournies par les gyromètres à gyroscope ainsi que les angles d'inclinaison des pendules pour le pilotage de l'aéronef. Les pendules servent avantageusement à la fois au pilotage de l'aéronef et à la détection d'une sortie du domaine de vol autorisé de façon analogique.

Par ailleurs, le système de contrôle de vol peut comporter un premier dispositif de contrôle de vol numérique et un second dispositif de contrôle de vol analogique. Le premier dispositif de contrôle de vol numérique est utilisé lorsque le système de contrôle de vol utilise une première valeur d'au moins une caractéristique de vol de l'aéronef mesurée par une chaîne principale de mesure et le second dispositif de contrôle de vol analogique est utilisé lorsque le système de contrôle de vol utilise au moins un signal analogique fonction d'au moins une caractéristique de vol de l'aéronef fournie par une chaîne de mesure de secours.

De plus, une chaîne de mesure de secours de l'aéronef peut comporter plusieurs systèmes de mesure d'une même caractéristique de vol de l'aéronef. Au moins deux systèmes de mesure peuvent alors être utilisés simultanément pour la comparaison des caractéristiques de vol et pour le pilotage automatique de l'aéronef. Au moins deux systèmes de mesure peuvent aussi être utilisés de façon différente, un système de mesure fournissant au moins un signal analogique de bascule dédié à une comparaison d'au moins une caractéristique de vol et l'autre système de mesure fournissant au moins un signal analogique de pilotage dédié au pilotage automatique.

Par exemple, un second système de mesure peut comporter trois gyromètres à gyroscope et deux jeux de deux pendules. Ainsi, un premier jeu de deux pendules fournit des signaux analogiques de bascule et un second jeu de deux pendules fournit des signaux analogiques de pilotage.

Selon un aspect, une chaîne de mesure de secours de l'aéronef est alimentée électriquement de façon autonome et indépendante, notamment vis-à-vis d'une chaîne principale de mesure par exemple par au moins une batterie électrique dédiée. De la sorte, une chaîne de mesure de secours de l'aéronef est alimentée y compris en cas de défaillance du dispositif d'alimentation de la chaîne principale de mesure. Par ailleurs, une chaîne de mesure de secours peut comporter plusieurs batteries électriques dédiées respectivement et de façon indépendante à l'alimentation de chaque système de mesure qu'elle comporte.

La présente invention a aussi pour objet un ensemble sécurisé de contrôle d'une position d'un aéronef vis-à-vis d'un domaine de vol autorisé. Cet ensemble sécurisé de contrôle comporte :
- au moins une chaîne principale de mesure mesurant une première valeur d'au moins une caractéristique de vol de l'aéronef,
- un système sécurisé de contrôle d'une position d'un aéronef vis-à-vis d'un domaine de vol autorisé tel que précédemment décrit, et
- un système de contrôle de vol relié notamment au dispositif de bascule du système sécurisé de contrôle et assurant le pilotage automatique de l'aéronef.

La présente invention a enfin pour objet un aéronef comportant :
- au moins un rotor de sustentation, et
- un ensemble sécurisé de contrôle d'une position d'un aéronef vis-à-vis du domaine de vol autorisé tel que précédemment décrit.

L'aéronef est par exemple un drone comportant au moins un rotor de sustentation, et en particulier un drone multirotor, à savoir comportant au moins deux rotors de sustentation.

L'invention et ses avantages apparaîtront avec plus de détails dans le cadre de la description qui suit avec des exemples donnés à titre illustratif en référence aux figures annexées qui représentent :
- la figure 1, un aéronef comportant un système sécurisé de contrôle de sa position vis-à-vis d'un domaine de vol autorisé,
- la figure 2, un premier système de mesure d'une chaîne de mesure de secours,
- les figures 3 à 5, un second système de mesure d'une chaîne de mesure de secours, et
- la figure 6, un schéma synoptique d'un procédé sécurisé de contrôle d'une position d'un aéronef vis-à-vis d'un domaine de vol autorisé.

Les éléments présents dans plusieurs figures distinctes sont affectés d'une seule et même référence.

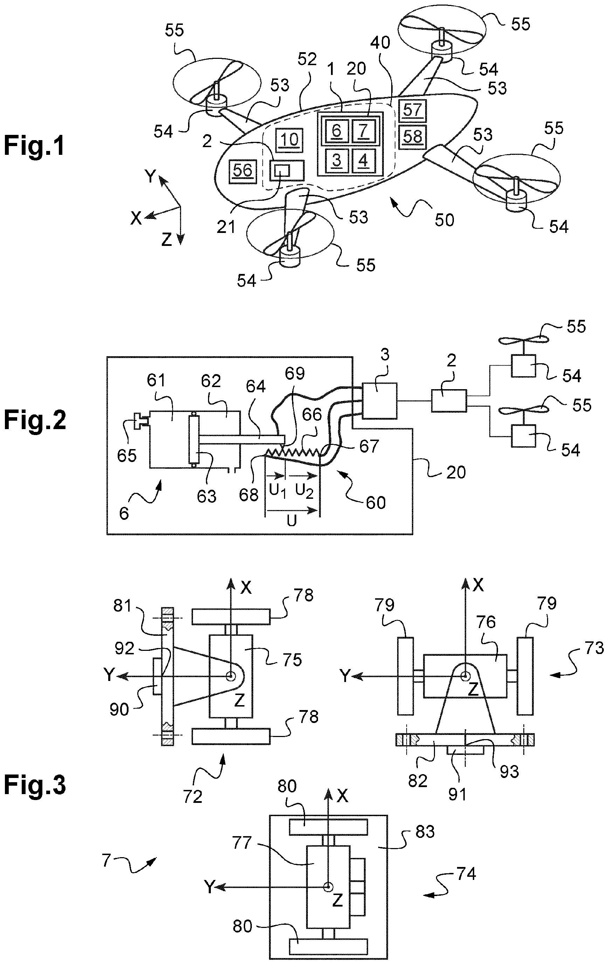

[Fig 1] Un aéronef 50, représenté à la figure 1, comporte un corps central 52, quatre bras de liaison 53 reliés au corps central 52 et quatre rotors de sustentation 55 supportés respectivement par un bras de liaison 53. Les rotors de sustentation 55 sont entraînés en rotation par quatre moteurs 54 indépendants et permettent la propulsion et la sustentation de l'aéronef 50. L'aéronef 50 est par exemple un drone. Les quatre moteurs 54 peuvent être des moteurs thermiques ou bien des moteurs électriques par exemple. L'aéronef 50 peut être d'un autre type et comporter un nombre différent de rotors et de moteurs sans sortir du cadre de l'invention.

Un repère (X,Y,Z) est représenté sur la figure 1. Une direction longitudinale X s'étend de l'arrière de l'aéronef 50 vers l'avant de l'aéronef 50. Une direction d'élévation Z s'étend de haut en bas perpendiculairement à la direction longitudinale X. Une direction transversale Y s'étend de gauche à droite perpendiculairement aux directions longitudinale X et d'élévation Z. La direction longitudinale X est parallèle à l'axe de roulis de l'aéronef 50, la direction transversale Y est parallèle à son axe de tangage et la direction d'élévation Z est parallèle à son axe de lacet.

Le corps central 52 comporte un système de contrôle de vol 2, une chaîne principale de mesure 10 mesurant des caractéristiques de vol de l'aéronef 50 et un système sécurisé 1 de contrôle d'une position de l'aéronef 50 vis-à-vis d'un domaine de vol autorisé. La chaîne principale de mesure 10 est de préférence numérique et comporte par exemple une ou plusieurs centrales inertielles et un ou plusieurs accéléromètres.

Le corps central 52 comporte également une source d'énergie 56 alimentant les quatre moteurs 54, par exemple un réservoir de carburant ou bien une source d'énergie électrique selon le type des moteurs 54. Le corps central 52 comporte aussi une source d'énergie électrique principale 57 alimentant électriquement le système de contrôle de vol 2 et la chaîne principale de mesure 10 ainsi qu'une source d'énergie électrique secondaire 58 dédiée au système sécurisé de contrôle 1.

Le système sécurisé de contrôle 1 comporte une chaîne de mesure de secours 20 analogique et un dispositif de bascule 3.

Le système sécurisé de contrôle 1 est relié à la chaîne principale de mesure 10 et au système de contrôle de vol 2. Le système de contrôle de vol 2 est quant à lui relié aux moteurs 54 entraînant les rotors de sustentation 55 afin de commander ces moteurs 54 en fonction des caractéristiques de vol obtenues par la chaîne principale de mesure 10 ou bien par la chaîne de mesure de secours 20 pour le pilotage automatique de l'aéronef 50. Le système de contrôle de vol 2 peut comporter un boîtier de contrôle 21 relié aux moteurs 54 et destiné à gérer leur fonctionnement.

Les caractéristiques de vol de l'aéronef 50 mesurées par la chaîne principale de mesure 10 et la chaîne de mesure de secours 20 comportent une ou plusieurs des caractéristiques suivante : les angles d'assiettes de l'aéronef 50 autour de ses axes de roulis et de tangage ou bien leurs variations, la hauteur de vol de l'aéronef 50 ou encore les vitesses angulaires de l'aéronef 50 autour des axes de roulis, de tangage et de lacet. La chaîne principale de mesure 10 et la chaîne de mesure de secours 20 peuvent comporter plusieurs systèmes de mesure afin de mesurer ces caractéristiques de vol.

Un ensemble sécurisé 40 de contrôle d'une position d'un aéronef 50 vis-à-vis de son domaine de vol autorisé comporte alors la chaîne principale de mesure 10, le système de contrôle de vol 2 et le système sécurisé 1 de contrôle de la position de l'aéronef 50 vis-à-vis du domaine de vol autorisé.

[Fig 2] La chaîne de mesure de secours 20 peut comporter un premier système de mesure 6 de la hauteur de vol de l'aéronef 50 représenté sur la figure 2. Le premier système de mesure 6 comporte une première chambre 61, une seconde chambre 62, un piston 63 mobile agencé entre les deux chambres 61,62, une tige 64 solidaire du piston 63 et un rhéostat 60 muni d'une résistance électrique 66. La première chambre 61 est fermée par un bouchon 65 et contient un fluide à une pression de référence correspondant à une altitude de référence. La seconde chambre 62 est en contact avec une atmosphère extérieure à l'aéronef 50 présentant une pression atmosphérique courante.

Le piston 63 et la tige 64 se déplacent solidairement lors d'une variation de la pression atmosphérique courante. La tige 64 est reliée à une borne électrique 69 mobile du rhéostat 60 et induit, lors de son déplacement, une variation des valeurs de résistances électriques entre respectivement les bornes électriques 67,68 de la résistance électrique 66 et la borne électrique 69, formant de la sorte un pont diviseur de tension électrique.

L'altitude de référence est par exemple l'altitude de l'aire de décollage de l'aéronef 50, la pression de référence étant la pression atmosphérique de l'air au niveau de cette aire de décollage. La hauteur de vol de l'aéronef 50 par rapport au niveau du sol à partir duquel a décollé l'aéronef 50, est ainsi mesurée par ce premier système de mesure 6 sous la forme d'une altitude barométrique, par comparaison de la pression atmosphérique courante avec la pression de référence.

Le premier système de mesure 6 émet alors un signal analogique, sous la forme par exemple d'une tension électrique, fonction de cette hauteur de vol.

De façon alternative, la chaîne de mesure de secours 20 peut comporter un second système de mesure 7 des vitesses angulaires de l'aéronef 50 autour des axes de roulis, de tangage et/ou de lacet ainsi que des angles d'assiettes de l'aéronef 50 autour de l'axe de roulis et de l'axe de tangage, tel que représenté sur les figures 3 à 5.

[Fig 3] Le second système de mesure 7 peut comporter trois gyromètres à gyroscope 72-74 et deux pendules 90,91, comme représenté sur la figure 3. Un premier gyromètre à gyroscope 72 est dédié à une mesure d'une vitesse angulaire autour de l'axe de roulis. Un deuxième gyromètre à gyroscope 73 est dédié à une mesure d'une vitesse angulaire autour de l'axe de tangage. Un troisième gyromètre à gyroscope 74 est dédié à une mesure d'une vitesse angulaire autour de l'axe de lacet.

Les gyromètres à gyroscope 72-74 comportent chacun une base 81-83, un moteur électrique 75-77 entraînant deux volants d'inertie 78-80 coaxiaux et contrarotatifs ainsi qu'un premier dispositif de mesure 87-89. L'axe de rotation d'un moteur électrique 75-77 d'un gyromètre 72-74 est perpendiculaire à l'axe correspondant à la vitesse angulaire mesurée par le gyromètre à gyroscope 72-74. Chaque moteur électrique 75-77 est mobile en rotation par rapport à sa base 81-83 selon un axe de rotation également perpendiculaire à l'axe de la vitesse angulaire mesurée et perpendiculaire à l'axe de rotation du moteur électrique 75-77.

Chaque gyroscope 72-74 comporte un premier dispositif de mesure 87-89 agencé entre la base 81-83 et le moteur électrique 75-77 de chaque gyromètre à gyroscope 72-74 pour mesurer par exemple une vitesse angulaire, une position angulaire ou bien un moment en rotation du moteur électrique 75-77 vis-à-vis de la base 81-83 associés.

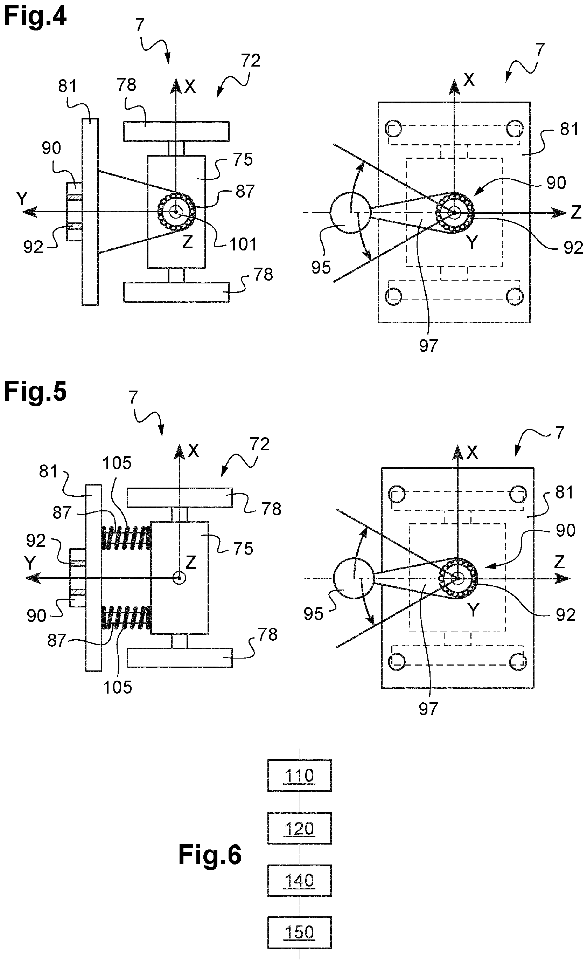

[Fig 4] Un premier dispositif de mesure 87 peut comprendre un codeur de type résistance angulaire variable agencé au niveau d'une liaison de type pivot 101 entre la base 81 et le moteur électrique 75 du gyromètre 72 comme représenté sur la figure 4.

[Fig 5] Un premier dispositif de mesure 87 peut comprendre un capteur à effet hall ou bien un capteur piézo-électrique, des ressorts 105 étant agencés entre la base 81 et le moteur électrique 75 du gyromètre 72 comme représenté sur la figure 5.

Ces gyromètres à gyroscope 72-74 peuvent être miniaturisés en utilisant des moteurs électriques et des connectiques électriques à volumes et masses réduites.

Lors d'un mouvement de l'aéronef 50 autour d'un axe, les deux volants d'inertie 78-80 contrarotatifs d'un gyromètre 72-74 génèrent un couple gyroscopique selon un axe perpendiculaire à cet axe de mouvement de l'aéronef 50. Ce couple gyroscopique fait varier la position angulaire du moteur électrique 75-77 et des volants d'inertie 78-80 par rapport à leur base 81-83, lorsqu'un tel mouvement est possible, et par conséquent fait varier le signal analogique fourni par le premier dispositif de mesure 87-89 du gyroscope 72-74. Les trois signaux fournis respectivement par les premiers dispositifs de mesure 87-89 des trois gyromètres 72-74 permettent ainsi de caractériser le mouvement de l'aéronef 50 autour des axes de roulis, de tangage et de lacet. Chaque premier dispositif de mesure 87-89 délivre par exemple une tension électrique proportionnelle à la vitesse angulaire de l'aéronef 50 autour d'un de ces axes.

Les pendules 90,91 sont agencés oscillant librement de part et d'autre d'une verticale apparente de l'aéronef 50 et autour d'une liaison de type pivot selon respectivement l'axe de roulis et l'axe de tangage. Chaque pendule 90,91 est relié à une base 81,82 d'un gyromètre 72-73 mesurant la vitesse angulaire autour de l'axe de roulis ou de tangage. Un second dispositif de mesure 92,93 est agencé entre chaque pendule 90,91 et la base 81-82. Ces deux seconds dispositifs de mesure 92,93 sont par exemple des codeurs de type résistance angulaire variable délivrant des tensions électriques proportionnelles aux inclinaisons angulaires des pendules 90,91 et, de fait, aux angles d'assiettes de l'aéronef 50 autour des axes de roulis et de tangage.

Chaque pendule 90,91 comporte un corps 95 positionné à l'extrémité d'un bras 97 comme représenté sur les figures 4 et 5. La période des oscillations d'un pendule 90,91 est fonction de la masse du corps 95 et de la longueur du bras 97. De préférence, un temps de réponse faible de chaque pendule 90,91 est à privilégier tout en minimisant ses dimensions. Le choix d'un matériau dense pour le corps 95 d'un pendule 90 est donc intéressant.

Le premier système de mesure 6 et le second système de mesure 7 sont reliés, par exemple électriquement, au dispositif de bascule 3. Le premier système de mesure 6 est notamment relié au dispositif de bascule 3 par l'intermédiaire des bornes électriques 67,68 de la résistance électrique 66 et de la borne électrique 69 reliée à la tige 64. Le second système de mesure 7 peut être relié au dispositif de bascule 3 par l'intermédiaire des premiers dispositifs de mesure 87-89 et/ou des seconds dispositifs de mesure 92,93.

Le dispositif de bascule 3 exploite les caractéristiques de vol fournis par le premier système de mesure 6 ou le second système de mesure 7, à savoir la hauteur de vol, les vitesses angulaires et/ou les angles d'assiettes de l'aéronef 50, sous forme de signaux analogiques, par exemple des résistances électriques ou bien des tensions électriques. Le dispositif de bascule 3 est relié au système de contrôle de vol 2 afin de transmettre ces caractéristiques de vol de l'aéronef 50, sous forme d'un signal analogique par exemple, pour piloter automatiquement l'aéronef 50 par l'intermédiaire des moteurs 54 des rotors de sustentation 55.

Le dispositif de bascule 3 peut comporter un ou plusieurs comparateurs à amplificateur opérationnel, transistors de bascule et/ou relais qui basculent par exemple en fonction d'une tension électrique fournie par le premier et/ou le second système de mesure 6,7. La chaîne de mesure de secours 20 constitue de la sorte une chaîne de mesure analogique, les caractéristiques de vol de l'aéronef 50 étant traitées sous la forme de résistances électriques ou bien de tensions électriques variant de façon continue et sans utiliser de logiciels ou de microprocesseurs notamment.

[Fig 6] Le système sécurisé de contrôle 1 permet de mettre en œuvre le procédé sécurisé de contrôle d'une position d'un aéronef 50 vis-à-vis d'un domaine de vol autorisé dont un schéma synoptique est représenté sur la figure 6. Ce procédé comporte plusieurs étapes.

Au cours d'une étape de mesure 110, une première valeur d'au moins une caractéristique de vol de l'aéronef 50 est mesurée par la chaîne principale de mesure 10.

Au cours d'une étape d'émission 120, au moins un signal analogique fonction de ladite au moins une caractéristique de vol de l'aéronef 50 est émis par la chaîne de mesure de secours 20, par exemple par le premier et/ou le second système de mesure 6,7.

Dès lors, le système sécurisé de contrôle 1, et notamment le dispositif de bascule 3, détermine si un premier mode ou bien un deuxième mode de pilotage automatique de l'aéronef 50 doit être entrepris.

Au cours d'un premier mode 140 de pilotage automatique, le système de contrôle de vol 2 exploite par défaut la première valeur de chaque caractéristique de vol de l'aéronef 50 mesurée par la chaîne principale de mesure 10 afin de piloter automatiquement l'aéronef 50. Ce premier mode est ainsi réalisé lors d'un fonctionnement sans panne et/ou sans dysfonctionnement détecté sur l'aéronef 50.

Au cours d'un deuxième mode 150 de pilotage automatique, le système de contrôle de vol 2 exploite chaque signal analogique fourni par la chaîne de mesure de secours 20 afin de piloter automatiquement l'aéronef 50 dès qu'au moins une des caractéristiques de vol de l'aéronef 50 dépasse une limite prédéterminée ou bien dès qu'au moins une différence entre une première valeur d'une caractéristique de vol et une seconde valeur de ladite caractéristique de vol déterminée à partir d'un signal analogique est supérieure ou égale à une valeur prédéterminée. Le premier mode 140 pilotage automatique est alors stoppé et remplacé par le deuxième mode 150 de pilotage automatique.

Ainsi, le dispositif de bascule 3 permet suite à une comparaison des caractéristiques de vol de l'aéronef 50 mesurées par la chaîne principale de mesure 10 et/ou la chaîne de mesure de secours 20 entre elles ou bien vis-à-vis de limites prédéterminées d'un domaine de vol autorisé de l'aéronef 50, de basculer, quand cela est nécessaire, entre le premier mode 140 de pilotage automatique et le deuxième mode 150 de pilotage automatique.

Lors de cette comparaison, les caractéristiques de vol comparées avec les limites prédéterminées du domaine de vol autorisé peuvent être mesurées par une seule chaîne de mesure parmi la chaîne principale de mesure 10 et la chaîne de mesure de secours 20. La comparaison peut également utiliser simultanément les caractéristiques de vol mesurées par la chaîne principale de mesure 10 et par la chaîne de mesure de secours 20.

Les limites prédéterminées peuvent intégrer une marge de sécurité vis-à-vis des limites réelles du domaine de vol autorisé.

Le procédé permet ainsi de vérifier si l'aéronef 50 est proche des limites réelles de ce domaine de vol autorisé, voire si l'aéronef 50 est sorti de ce domaine de vol autorisé. Si tel est le cas, le deuxième mode 150 de pilotage automatique est réalisé en remplacement du premier mode 140 de pilotage automatique, le système de contrôle de vol 2 exploitant alors les caractéristiques de vol de l'aéronef 50 fournies par la chaîne de mesure de secours 20. En effet, ces caractéristiques de vol fournies sous la forme de signaux analogiques par la chaîne de mesure de secours 20 analogique sont moins sensibles aux perturbations et de fait limitent le risque d'utiliser des caractéristiques de vol non fiables et potentiellement défectueuses fournies par la chaîne principale de mesure 10.

Lors de cette comparaison, des premières valeurs de caractéristiques de vol mesurées par la chaîne principale de mesure 10 peuvent être comparées avec des secondes valeurs de ces mêmes caractéristiques de vol obtenues par l'intermédiaire de la chaîne de mesure de secours 20.

De la sorte, dès qu'au moins une différence entre les caractéristiques de vol obtenues par la chaîne principale de mesure 10 et par la chaîne de mesure de secours 20 est supérieure ou égale à une valeur prédéterminée, le procédé bascule du premier mode 140 de pilotage automatique vers le deuxième mode 150 de pilotage automatique.

De plus, s'il est constaté que l'aéronef 50 est proche des limites du domaine de vol autorisé, voire est sorti de ce domaine de vol autorisé, le système de contrôle de vol 2 peut maintenir automatiquement l'aéronef 50 dans le domaine de vol autorisé après avoir, le cas échéant, ramené l'aéronef 50 dans ce domaine de vol autorisé, en utilisant les caractéristiques de vol fournies sous la forme de signaux analogiques par la chaîne de mesure de secours 20.

Par exemple, lorsque la hauteur de vol de l'aéronef 50 est supérieure à une consigne de hauteur de vol maximale, le risque de dépassement du plafond de vol du domaine de vol autorisé est détecté.

Par exemple, lorsque l'aéronef 50 est un drone avec un pilote déporté en dehors de l'aéronef 50, la consigne de hauteur de vol maximale peut être égale à 150 mètres pour un drone volant à vue, c'est-à-dire que le pilote du drone est situé à faible distance du drone, typiquement 100 mètres, et voit en permanence le drone. La consigne de hauteur de vol maximale peut aussi être égale à 50 mètres pour un drone volant en immersion, à savoir que le pilote du drone ne voit pas obligatoirement le drone, mais à une vision de l'environnement du drone, typiquement par l'intermédiaire d'au moins une caméra que porte le drone.

De préférence, une marge de sécurité de l'ordre de quelques mètres, typiquement inférieure à 15 mètres, est retirée de la valeur de consigne de hauteur de vol maximale.

Dans ce cas, le dispositif de bascule 3 exploite la hauteur de vol mesurée par le premier système de mesure 6 et la communique au système de contrôle de vol 2 afin que le système de contrôle de vol 2 utilise cette hauteur de vol pour piloter l'aéronef 50.

De plus, le deuxième mode 150 de pilotage automatique peut comporter une sous-étape de commande du boîtier de contrôle 21 commandant chaque moteur 54 par l'intermédiaire d'un signal analogique.

Par exemple, chaque rotor de sustentation 55 étant entraîné en rotation par un moteur 54 électrique, le boîtier de contrôle 21 reçoit une tension électrique fournie par la chaîne de mesure de secours 20, et typiquement le premier système de mesure 6, cette tension électrique étant alors représentatif de la hauteur de vol de l'aéronef 50. Le boîtier de contrôle 21 utilise alors cette tension électrique afin d'alimenter électriquement chaque moteur 54. Ainsi, dès que la hauteur de vol de l'aéronef 50 dépasse la consigne de hauteur de vol maximale, l'aéronef 50 descend à vitesse contrôlée grâce à la variation de cette tension électrique jusqu'à une hauteur de vol sensiblement égale à la consigne de hauteur de vol maximale, puis l'aéronef 50 se stabilise automatiquement à une hauteur de vol sensiblement égale à cette consigne de hauteur de vol maximale.

Selon un autre exemple, lorsqu'au moins un des angles d'assiettes de l'aéronef 50 autour des axes de roulis et de tangage est inférieur à une consigne d'angle d'assiette minimale ou bien supérieur à une consigne d'angle d'assiette maximale, le risque de dépassement d'une consigne correspondant à une limite prédéterminée du domaine de vol autorisé est détecté. Les consignes d'angles d'assiettes minimales ou maximales peuvent être identiques, et donc communes, pour les axes de tangage et de roulis ou bien être spécifiques et dédiées à chacun de ces axes. Une consigne d'angle d'assiette minimale ou maximale commune est par exemple égale à ±15°. Dans le cas particulier de réalisation d'une manœuvre d'évitement d'un obstacle, cette consigne d'angle d'assiette minimale ou maximale commune peut être égale à ±30°.

Dans ce cas, le dispositif de bascule 3 exploite les angles d'assiettes mesurés par le second système de mesure 7 et les communique au système de contrôle de vol 2 afin que le système de contrôle de vol 2 utilise ces angles d'assiettes pour piloter l'aéronef 50 de sorte à ramener l'aéronef 50 à des angles d'assiettes compris entre les consignes d'angles d'assiettes minimales et maximales, puis à le maintenir à des angles d'assiettes compris entre ces consignes.

Par exemple, le dispositif de bascule 3 peut utiliser des valeurs d'angles d'assiettes autour des axes de roulis et de tangage égales aux angles d'inclinaison des pendules 90,91 fournis par les seconds dispositifs de mesure 92,93.

Le système sécurisé de contrôle 1 peut également comporter un dispositif d'intégration 4 déterminant les valeurs d'angles d'assiettes ou de variation de ces angles d'assiettes par intégration des mesures de vitesses angulaires fournies par les premiers dispositifs de mesure 87-89. Cette intégration est faite par exemple de façon analogique, typiquement par un ou plusieurs amplificateurs opérationnels du dispositif d'intégration 4.

La chaîne de mesure de secours 20 ou bien le dispositif de bascule 3 peut également déterminer les valeurs d'angles d'assiettes par hybridation des valeurs intégrales des vitesses angulaires et des angles d'inclinaison des pendules 90,91.

En outre, une limite prédéterminée peut comporter deux niveaux de comparaison. Ainsi, lorsqu'un premier niveau de comparaison est dépassé, le système de contrôle de vol 2 utilise les caractéristiques de vol de l'aéronef 50 mesurées par la chaîne de mesure de secours 20 et pilote l'aéronef 50 en ralentissant éventuellement la progression de la caractéristique de vol jugée limite vis-à-vis du domaine de vol autorisé. Ensuite, si un second niveau de comparaison est dépassé, ce second niveau de comparaison étant alors supérieur au premier niveau de comparaison, le système de contrôle de vol 2 agit automatiquement afin de ramener l'aéronef 50 dans le domaine de vol autorisé et en particulier afin de ramener par exemple cette caractéristique de vol en dessous du second niveau de comparaison.

Une limite prédéterminée peut également prendre en compte une valeur temporelle et comporter par exemple un seuil et une durée critique. Ainsi, le deuxième mode 150 de pilotage automatique peut par exemple être réalisé lorsque d'une part une caractéristique de vol est supérieure à ce seuil et d'autre part si une durée nécessaire pour que cette caractéristique de vol retrouve une valeur inférieure ou égale au seuil est supérieure à une durée critique.

La limite prédéterminée peut également comporter une notion de détection d'un obstacle dans l'environnement de l'aéronef 50 comme condition secondaire de réalisation du deuxième mode 150 de pilotage automatique, l'aéronef 50 comportant alors un dispositif de détection d'obstacle.

Le système sécurisé de contrôle 1 et le procédé précédemment décrit permettent avantageusement d'assurer une redondance mécanique dans la mesure des caractéristiques de vol de l'aéronef 50 avec un niveau de fiabilité plus élevé que des systèmes électroniques et/ou utilisant des algorithmes et des logiciels. Le système sécurisé de contrôle 1 et le procédé peuvent notamment permettre de certifier des aéronefs 50, et en particulier des drones, atteignant un niveau de sécurité et de sûreté suffisant pour cet aéronef 50, pour les autres aéronefs évoluant à proximité et aussi pour les installations au sol.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles.

Notamment, tout aéronef comportant au moins un rotor de sustentation 54 peut comporter un système sécurisé de contrôle 1 d'une position d'un aéronef 50 vis-à-vis de son domaine de vol autorisé et appliquer le procédé sécurisé de contrôle d'une position d'un aéronef 50 vis-à-vis d'un domaine de vol autorisé précédemment décrit.

## Revendications

1. Procédé sécurisé de contrôle d'une position d'un aéronef (50) vis-à-vis d'un domaine de vol autorisé, ledit procédé comportant les étapes suivantes :
- mesure (110) d'une première valeur d'au moins une caractéristique de vol dudit aéronef (50) par l'intermédiaire d'une chaîne principale de mesure (10) dudit aéronef (50), ladite au moins une caractéristique de vol étant exploitée par un système de contrôle de vol (2) dudit aéronef (50) pour piloter automatiquement ledit aéronef (50) dans le domaine de vol autorisé,
- émission (120) d'au moins un signal analogique fonction de ladite au moins une caractéristique de vol dudit aéronef (50) par l'intermédiaire d'une chaîne de mesure de secours (20) analogique dudit aéronef (50),
- application d'un premier mode (140) de pilotage automatique dudit aéronef (50) réalisée par défaut par ledit système de contrôle de vol (2) en exploitant ladite première valeur d'au moins une caractéristique de vol dudit aéronef (50) pour piloter automatiquement ledit aéronef (50), le procédé étant **caractérisé par** les étapes suivantes:
- application d'un deuxième mode (150) de pilotage automatique dudit aéronef (50) réalisée par ledit système de contrôle de vol (2) en exploitant ledit au moins un signal analogique pour piloter automatiquement ledit aéronef (50) dès qu'au moins une de ladite au moins une caractéristique de vol dudit aéronef (50) dépasse une limite prédéterminée ou bien dès qu'au moins une différence entre ladite première valeur d'une caractéristique de vol et d'une seconde valeur de ladite caractéristique de vol déterminée à partir d'un dit signal analogique est supérieure ou égale à une valeur prédéterminée, afin de maintenir ou ramener l'aéronef (50) dans le domaine de vol autorisé.

2. Procédé selon la revendication 1,
**caractérisé en ce que** ledit au moins un signal analogique comporte au moins un signal analogique de pilotage et au moins un signal analogique de bascule, ledit au moins un signal analogique de pilotage étant dédié au deuxième mode (150) de pilotage automatique dudit aéronef (50) et ledit au moins un signal analogique de bascule étant dédié à une comparaison de ladite au moins une caractéristique de vol dudit aéronef (50) vis à vis de ladite limite prédéterminée dudit domaine de vol autorisé ou bien à une comparaison de ladite première valeur d'une caractéristique de vol et d'une seconde valeur de ladite caractéristique de vol déterminée à partir d'un dit signal analogique.

3. Procédé selon l'une quelconque des revendications 1 à 2, **caractérisé en ce que** ladite au moins une caractéristique de vol comporte des angles d'assiettes en roulis et en tangage dudit aéronef (50) respectivement autour d'un axe de roulis et autour d'un axe de tangage dudit aéronef (50).

4. Procédé selon la revendication 3,
**caractérisé en ce que** ladite étape d'émission (120) est réalisée à l'aide des étapes suivantes :
- génération d'au moins deux signaux analogiques par au moins deux gyromètres à gyroscope (72-74) agencés respectivement selon lesdits axes de tangage et de roulis,
- détermination de vitesses angulaires dudit aéronef (50) autour desdits axes de tangage et de roulis à partir desdits d'au moins deux signaux analogiques, et
- détermination desdits angles d'assiettes par intégration desdits vitesses angulaires.

5. Procédé selon l'une quelconque des revendications 3 à 4, **caractérisé en ce que** ladite étape d'émission (120) est réalisée à l'aide des étapes suivantes :
- génération d'au moins deux signaux analogiques fonction respectivement des angles d'inclinaison d'au moins deux pendules (90,91) par rapport à une verticale apparente dudit aéronef (50) respectivement autour desdits axes de tangage et de roulis, lesdits pendules (90,91) oscillant autour respectivement desdits axes de tangage et de roulis et de part et d'autre de ladite verticale apparente dudit aéronef (50),
- détermination desdits angles d'inclinaison desdits pendules (90,91) à partir desdits d'au moins deux signaux analogiques, et
- détermination desdits angles d'assiettes dudit aéronef (50) égaux auxdits angles d'inclinaison desdits pendules (90,91).

6. Procédé selon la revendication 3,
**caractérisé en ce que** ladite étape d'émission (120) est réalisée à l'aide des étapes suivantes :
- génération d'au moins deux signaux analogiques par au moins deux gyromètres à gyroscope (72-74) agencés respectivement selon lesdits axes de tangage et de roulis,
- détermination (122) de vitesses angulaires dudit aéronef (50) autour desdits axes de tangage et de roulis à partir desdits au moins deux signaux analogiques,
- génération d'au moins deux signaux analogiques fonction respectivement des angles d'inclinaison d'au moins deux pendules (90,91) par rapport à une verticale apparente dudit aéronef (50) respectivement autour desdits axes de tangage et de roulis, lesdits pendules (90,91) oscillant autour respectivement desdits axes de tangage et de roulis et de part et d'autre de ladite verticale apparente dudit aéronef (50), et
- détermination desdits angles d'inclinaison desdits pendules (90,91) à partir desdits au moins deux signaux analogiques, et
- détermination desdits angles d'assiettes par hybridation d'une part des intégrales desdites vitesses angulaires dudit aéronef (50) autour desdits axes de tangage et de roulis et d'autre part desdits angles d'inclinaison desdits pendules (90,91) afin de déterminer lesdits angles d'assiettes.

7. Procédé selon l'une quelconque des revendications 5 à 6, **caractérisé en ce que** ledit deuxième mode (150) de pilotage automatique est réalisé :
- dès qu'un angle d'inclinaison d'un desdits pendules (90,91) est supérieur à un premier seuil, ou bien
- lorsque d'une part ledit angle d'inclinaison d'un desdits pendules (90,91) est supérieur à un second seuil, ledit second seuil étant inférieur audit premier seuil, et d'autre part une hauteur de vol dudit aéronef (50) est inférieure à une hauteur de vol critique.

8. Procédé selon l'une quelconque des revendications 1 à 7, **caractérisé en ce que** ladite au moins une caractéristique de vol comporte la hauteur de vol dudit aéronef (50).

9. Procédé selon la revendication 8,
**caractérisé en ce que** ladite étape d'émission (120) comporte les étapes suivantes :
- comparaison (131) d'une pression atmosphérique extérieure audit aéronef (50) avec une pression de référence, ladite pression de référence étant égale à une pression atmosphérique au niveau d'une aire de décollage dudit aéronef (50),
- variation (132) d'une résistance électrique en fonction d'une différence entre ladite pression atmosphérique extérieure audit aéronef (50) et ladite pression de référence, et
- génération (133) d'un signal analogique proportionnel à ladite résistance électrique.

10. Procédé selon l'une quelconque des revendications 1 à 9, **caractérisé en ce que** ladite limite prédéterminée est égale à une limite réelle dudit domaine de vol autorisé dudit aéronef (50) à laquelle est ajoutée une marge de sécurité.

11. Procédé selon l'une quelconque des revendications 1 à 10, **caractérisé en ce que** ledit deuxième mode (150) de pilotage automatique est réalisé lorsque une caractéristique de vol est supérieure à un seuil et si une durée nécessaire pour que ladite caractéristique de vol retrouve une valeur inférieure ou égale audit seuil est supérieure à une durée critique.

12. Procédé selon l'une quelconque des revendications 1 à 11, **caractérisé en ce que**, ledit aéronef (50) comportant au moins un rotor de sustentation (55) entraîné en rotation par un moteur (54) électrique, ledit deuxième mode de pilotage automatique (150) comporte une sous-étape de commande d'un boîtier de contrôle commandant ledit moteur (54) par l'intermédiaire dudit au moins un signal analogique.

13. Système sécurisé de contrôle (1) d'une position d'un aéronef (50) vis-à-vis d'un domaine de vol autorisé, ledit aéronef (50) comportant :
- au moins une chaîne principale de mesure (10) mesurant une première valeur d'au moins une caractéristique de vol dudit aéronef (50), et
- un système de contrôle de vol (2) assurant ledit pilotage automatique dudit aéronef (50) en exploitant lesdites caractéristiques de vol dudit aéronef (50),
**caractérisé en ce que** ledit système sécurisé de contrôle (1) est configuré pour appliquer ledit procédé selon l'une quelconque des revendications 1 à 12 et comporte :
- au moins une chaîne de mesure de secours (20) analogique fournissant au moins un signal analogique fonction de ladite au moins une caractéristique de vol dudit aéronef (50), et
- un dispositif de bascule (3) configuré pour transmettre audit système de contrôle de vol (2), par défaut ladite première valeur et, une seconde valeur de ladite caractéristique de vol déterminée à partir d'un dit signal analogique dès qu'au moins une caractéristique de vol dudit aéronef (50) dépasse une limite prédéterminée ou bien dès qu'au moins une différence entre ladite première valeur et ladite seconde valeur de ladite caractéristique de vol est supérieure ou égale à une valeur prédéterminée.

14. Système (1) selon la revendication 13,
**caractérisé en ce que** ladite chaîne de mesure de secours (20) comporte un premier système de mesure (6) d'une altitude barométrique dudit aéronef (50), ledit premier système de mesure (6) comportant une première chambre (61) fermée, une seconde chambre (62), un piston (63) et un rhéostat (60), ladite première chambre (61) fermée contenant un fluide à une pression de référence, ladite seconde chambre (62) étant en contact avec une atmosphère extérieure dans laquelle évolue ledit aéronef (50), ledit piston (63) étant agencé entre lesdites première et seconde chambres (61,62) et se déplaçant lors d'une variation d'une pression atmosphérique de ladite atmosphère extérieure, ledit rhéostat (60) comportant au moins une résistance électrique (66), ledit rhéostat (60) étant relié mécaniquement audit piston (63) et électriquement audit dispositif de bascule (3), de sorte que ledit rhéostat (60) fournit un signal analogique variant en fonction du déplacement dudit piston (63) audit dispositif de bascule (3) et/ou audit système de contrôle de vol (2).

15. Système (1) selon l'une quelconque des revendications 13 à 14, **caractérisé en ce que** ladite chaîne de mesure de secours (20) comporte un second système de mesure (7), ledit second système de mesure (7) comportant au moins deux gyromètres à gyroscope (72-74), agencés respectivement selon des axes de roulis et de tangage, ledit second système de mesure (7) comportant deux pendules (90,91), chaque pendule (90,91) étant lié à une base (81-82) par une liaison de type pivot autour dudit axe de tangage ou bien dudit axe de roulis, chaque gyromètre à gyroscope (72-74) étant muni d'un premier dispositif de mesure (87-89) fournissant un premier signal analogique proportionnelle à ladite vitesse angulaire autour dudit axe de roulis ou bien de tangage, ledit second système de mesure (7) étant muni de deux seconds dispositifs de mesure (92,93) agencés respectivement entre un pendule (90,91) et ladite base (81-83) et fournissant un second signal analogique proportionnelle à l'angle d'inclinaison dudit pendule (90,91) vis-à-vis d'une verticale apparente dudit aéronef (50).

16. Système (1) selon la revendication 15,
**caractérisé en ce que** chaque gyromètre à gyroscope (72-74) comporte une base (81-83) et un moteur électrique (75-77) entraînant deux volants d'inertie (78-80) coaxiaux et contrarotatifs, un axe de rotation dudit moteur électrique (75-77) étant perpendiculaire audit axe correspondant à ladite vitesse angulaire mesurée par ledit gyromètres à gyroscope (72-74), ledit moteur électrique (75-77) étant relié à ladite base (81-83) par une liaison de type pivot agencée perpendiculairement audit axe correspondant à ladite vitesse angulaire mesurée et perpendiculairement audit axe de rotation dudit moteur électrique (75-77), lesdits gyromètres à gyroscope (72-74) étant munis d'un premier dispositif de mesure (87-89) agencé entre ledit moteur électrique (75-77) et ladite base (81-83) et fournissant un premier signal analogique proportionnelle à ladite vitesse angulaire.

17. Système (1) selon l'une quelconque des revendications 13 à 16, **caractérisé en ce que** ladite chaîne de mesure de secours (20) dudit aéronef (50) est alimentée électriquement de façon autonome et indépendante par au moins une source d'énergie électrique (58).

18. Ensemble sécurisé (40) de contrôle d'une position d'un aéronef (50) vis-à-vis d'un domaine de vol autorisé comportant :
- au moins une chaîne principale de mesure (10) mesurant une première valeur d'au moins une caractéristique de vol dudit aéronef (50),
- un système de contrôle de vol (2) assurant ledit pilotage automatique dudit aéronef (50), et
- un système sécurisé de contrôle (1) d'une position d'un aéronef (50) vis-à-vis dudit domaine de vol autorisé,
**caractérisé en ce que** ledit système sécurisé de contrôle (1) est selon l'une quelconque des revendications 13 à 17.

19. Aéronef (50) comportant :
- au moins un rotor de sustentation (55),
- au moins une chaîne principale de mesure (10) mesurant une première valeur d'au moins une caractéristique de vol dudit aéronef (50), et
- un système de contrôle de vol (55) assurant ledit pilotage automatique dudit aéronef (50),
**caractérisé en ce que** ledit aéronef (50) comporte un système sécurisé de contrôle (1) d'une position d'un aéronef (50) vis-à-vis dudit domaine de vol autorisé selon l'une quelconque des revendications 13 à 17.

20. Aéronef (50) selon la revendication 19,
**caractérisé en ce que** ledit aéronef (50) est un drone multirotor comportant au moins deux rotors de sustentation (55).

## Patentansprüche

1. Sicherungsverfahren zur Überwachung der Position eines Luftfahrzeugs (50) in Bezug auf ein genehmigtes Fluggebiet, wobei das Verfahren die folgenden Schritte umfasst:
- Messen (110) eines ersten Wertes von mindestens einer Flugeigenschaft des Luftfahrzeugs (50) mit Hilfe einer Hauptmesskette (10) des Luftfahrzeugs (50), wobei die mindestens eine Flugeigenschaft von einem Flugsteuerungssystem (2) des Luftfahrzeugs (50) verwendet wird, um das Luftfahrzeug (50) automatisch innerhalb des genehmigten Fluggebiets zu fliegen,
- Senden (120) mindestens eines analogen Signals in Abhängigkeit von der mindestens einen Flugeigenschaft des Luftfahrzeugs (50) über eine analoge Hilfsmesskette (20) des Luftfahrzeugs (50),
- Anwenden eines standardmäßig von dem Flugsteuerungssystem (2) ausgeführten ersten Autopilotmodus (140) des Luftfahrzeugs (50) unter Verwendung des ersten Werts mindestens einer Flugeigenschaft des Luftfahrzeugs (50), um das Luftfahrzeug (50) autopilotisch zu steuern, wobei das Verfahren **gekennzeichnet ist durch** die folgenden Schritte:
- Anwenden eines zweiten Autopilotmodus (150) des Luftfahrzeugs (50), der von dem Flugsteuerungssystem (2) unter Ausnutzung des mindestens einen Analogsignals durchgeführt wird, um das Luftfahrzeug (50) autopilotisch zu steuern, sobald mindestens eine der mindestens einen Flugeigenschaften des Luftfahrzeugs (50) einen vorgegebenen Grenzwert überschreitet oder sobald mindestens eine Differenz zwischen dem ersten Wert einer Flugeigenschaft und einem zweiten Wert der Flugeigenschaft, der aus dem Analogsignal bestimmt wird, größer oder gleich einem vorgegebenen Wert ist um das Luftfahrzeug (50) im zulässigen Fluggebiet zu halten oder dorthin zurückzubringen.

2. Verfahren nach Anspruch 1,
**dadurch gekennzeichnet, dass** das mindestens eine analoge Signal mindestens ein analoges Steuersignal und mindestens ein analoges Umschaltsignal umfasst, wobei das mindestens eine analoge Steuersignal dem zweiten Autopilotmodus (150) des Luftfahrzeugs (50) zugeordnet ist und das mindestens eine analoge Umschaltsignal einem Vergleich der mindestens einen Flugeigenschaft des Luftfahrzeugs (50) in Bezug auf die vorgegebene Grenze des zulässigen Fluggebiets oder einem Vergleich des ersten Werts einer Flugeigenschaft und dem aus einem analogen Signal bestimmten zweiten Werts der Flugeigenschaft dient.

3. Verfahren nach einem der Ansprüche 1 bis 2,
**dadurch gekennzeichnet, dass** die mindestens eine Flugeigenschaft Roll- und Nicklagewinkel des Luftfahrzeugs (50) um eine Rollachse bzw. um eine Nickachse des Luftfahrzeugs (50) umfasst.

4. Verfahren nach Anspruch 3,
**dadurch gekennzeichnet, dass** der Schritt des Sendens (120) mittels der folgenden Schritte durchgeführt wird:
- Erzeugen von mindestens zwei Analogsignalen durch mindestens zwei Gyroskop-Gyrometer (72-74), die jeweils entlang der Nick- und Rollachse ausgerichtet sind,
- Bestimmen von Winkelgeschwindigkeiten des Luftfahrzeugs (50) um die Nick- und Rollachse aus den mindestens zwei Analogsignalen, und
- Bestimmen der Lagewinkel durch Integrieren der Winkelgeschwindigkeiten.

5. Verfahren nach einem der Ansprüche 3 bis 4,
**dadurch gekennzeichnet, dass** der Schritt des Sendens (120) mittels der folgenden Schritte durchgeführt wird:
- Erzeugen von mindestens zwei Analogsignalen jeweils in Abhängigkeit von den Neigungswinkeln von mindestens zwei Pendeln (90, 91) in Bezug auf eine scheinbare Vertikale des Luftfahrzeugs (50) um die Nick- bzw. Rollachse, wobei die Pendel (90, 91) um die Nick- bzw. Rollachse und auf beiden Seiten der scheinbaren Vertikalen des Luftfahrzeugs (50) schwingen,
- Bestimmen der Neigungswinkel der Pendel (90, 91) aus den mindestens zwei Analogsignalen, und
- Bestimmen der Lagewinkel des Luftfahrzeugs (50), die den Neigungswinkeln der Pendel (90, 91) gleichen.

6. Verfahren nach Anspruch 3,
**dadurch gekennzeichnet, dass** der Schritt des Sendens (120) mittels der folgenden Schritte durchgeführt wird:
- Erzeugen von mindestens zwei Analogsignalen durch mindestens zwei Gyroskopkreisel (72-74), die jeweils entlang der Nick- und Rollachse ausgerichtet sind,
- Bestimmen (122) von Winkelgeschwindigkeiten des Luftfahrzeugs (50) um die Nick- und Rollachse aus den mindestens zwei Analogsignalen,
- Erzeugen von mindestens zwei Analogsignalen, die jeweils von den Neigungswinkeln von mindestens zwei Pendeln (90, 91) in Bezug auf eine scheinbare Vertikale des Luftfahrzeugs (50) um die Nick- und die Rollachse abhängen, wobei die Pendel (90, 91) um die Nick- bzw. Rollachse und auf beiden Seiten der scheinbaren Vertikalen des Luftfahrzeugs (50) schwingen, und
- Bestimmen der Neigungswinkel der Pendel (90, 91) aus den mindestens zwei Analogsignalen, und
- Bestimmen der Lagewinkel durch Hybridisierung einerseits der Integrale der Winkelgeschwindigkeiten des Luftfahrzeugs (50) um die Nick- und Rollachse und andererseits der Neigungswinkel der Pendel (90, 91), um die Lagewinkel zu bestimmen.

7. Verfahren nach einem der Ansprüche 5 bis 6,
**dadurch gekennzeichnet, dass** der zweite Autopilotmodus (150) ausgeführt wird:
- sobald ein Neigungswinkel eines der Pendel (90, 91) größer als ein erster Schwellenwert ist, oder
- wenn einerseits der Neigungswinkel eines der Pendel (90, 91) größer als ein zweiter Schwellenwert ist, wobei der zweite Schwellenwert kleiner als der erste Schwellenwert ist, und wenn andererseits eine Flughöhe des Luftfahrzeugs (50) kleiner als eine kritische Flughöhe ist.

8. Verfahren nach einem der Ansprüche 1 bis 7,
**dadurch gekennzeichnet, dass** die mindestens eine Flugeigenschaft die Flughöhe des Luftfahrzeugs (50) umfasst.

9. Verfahren nach Anspruch 8,
**dadurch gekennzeichnet, dass** der Schritt des Sendens (120) die folgenden Schritte umfasst:
- Vergleichen (131) eines atmosphärischen Drucks außerhalb des Luftfahrzeugs (50) mit einem Referenzdruck, wobei der Referenzdruck gleich einem atmosphärischen Druck in einem Startgebiet des Luftfahrzeugs (50) ist,
- Variieren (132) eines elektrischen Widerstands in Abhängigkeit von einer Differenz zwischen dem atmosphärischen Druck außerhalb des Luftfahrzeugs (50) und dem Referenzdruck, und
- Erzeugen (133) eines zu dem elektrischen Widerstand proportionalen Analogsignals.

10. Verfahren nach einem der Ansprüche 1 bis 9,
**dadurch gekennzeichnet, dass** der vorgegebene Schwellenwert gleich einer tatsächlichen Grenze des zulässigen Fluggebiets des Luftfahrzeugs (50) zuzüglich einer Sicherheitsspanne ist.

11. Verfahren nach einem der Ansprüche 1 bis 10,
**dadurch gekennzeichnet, dass** der zweite Autopilotmodus (150) ausgeführt wird, wenn eine Flugeigenschaft größer als ein Schwellenwert ist und wenn eine Zeit, die erforderlich ist, damit die Flugeigenschaft zu einem Wert zurückkehrt, der kleiner oder gleich dem Schwellenwert ist, größer als eine kritische Zeit ist.

12. Verfahren nach einem der Ansprüche 1 bis 11,
**dadurch gekennzeichnet, dass** das Luftfahrzeug (50) mindestens einen Hubrotor (55) umfasst, der von einem Elektromotor (54) in Drehung versetzt wird, wobei der zweite Autopilotmodus (150) einen Unterschritt zur Steuerung eines den Motor (54) steuernden Steuergeräts mit Hilfe des mindestens einen Analogsignals umfasst.

13. Sicherungssystem (1) zur Überwachung der Position eines Luftfahrzeugs (50) in Bezug auf ein genehmigtes Fluggebiet, wobei das Luftfahrzeug (50) umfasst:
- mindestens eine Hauptmesskette (10), die einen ersten Wert von mindestens einer Flugeigenschaft des Luftfahrzeugs (50) misst, und
- ein Flugsteuerungssystem (2), das die Autopilotsteuerung des Luftfahrzeugs (50) durch Ausnutzung der Flugeigenschaften des Luftfahrzeugs (50) gewährleistet,
**dadurch gekennzeichnet, dass** das Sicherungssystem (1) konfiguriert ist, das Verfahren nach einem der Ansprüche 1 bis 12 anzuwenden, und umfasst:
- mindestens eine analoge Hilfsmesskette (20), die mindestens ein Analogsignal in Abhängigkeit von der mindestens einen Flugeigenschaft des Luftfahrzeugs (50) liefert, und
- eine Schaltvorrichtung (3), die konfiguriert ist, um an das Flugsteuerungssystem (2) standardmäßig den ersten Wert und, sobald mindestens eine Flugeigenschaft des Luftfahrzeugs (50) einen vorgegebenen Grenzwert überschreitet oder sobald mindestens eine Differenz zwischen dem ersten Wert und dem zweiten Wert der Flugeigenschaft größer als oder gleich einem vorgegebenen Wert ist, einen aus dem Analogsignal bestimmten zweiten Wert der Flugeigenschaft zu übertragen.

14. System (1) nach Anspruch 13,
**dadurch gekennzeichnet, dass** die Hilfsmesskette (20) ein erstes Messsystem (6) zum Messen einer barometrischen Höhe des Luftfahrzeugs (50) umfasst, wobei das erste Messsystem (6) eine geschlossene erste Kammer (61), eine zweite Kammer (62), einen Kolben (63) und einen Rheostaten (60) umfasst, wobei die geschlossene erste Kammer (61) ein Fluid mit einem Referenzdruck enthält, wobei die zweite Kammer (62) in Kontakt mit einer äußeren Atmosphäre steht, in der das Luftfahrzeug (50) fliegt, wobei der Kolben (63) zwischen der ersten und der zweiten Kammer (61, 62) angeordnet ist und sich bei einer Änderung eines atmosphärischen Drucks der äußeren Atmosphäre bewegt, wobei der Rheostat (60) mindestens einen elektrischen Widerstand (66) umfasst, wobei der Rheostat (60) mechanisch mit dem Kolben (63) und elektrisch mit der Schaltvorrichtung (3) verbunden ist, so dass der Rheostat (60) ein Analogsignal, das sich in Abhängigkeit von der Verschiebung des Kolbens (63) ändert, an die Schaltvorrichtung (3) und/oder an das Flugsteuerungssystem (2) liefert.

15. System (1) nach einem der Ansprüche 13 bis 14,
**dadurch gekennzeichnet, dass** die Hilfsmesskette (20) ein zweites Messsystem (7) umfasst, wobei das zweite Messsystem (7) mindestens zwei Gyroskop-Gyrometer (72-74) umfasst, die jeweils entlang der Roll- und der Nickachse ausgerichtet sind, wobei das zweite Messsystem (7) zwei Pendel (90, 91) umfasst, wobei jedes Pendel (90, 91) mit einer Basis (81-82) durch eine Schwenkverbindung um die Nickachse oder die Rollachse verbunden ist, jedes Gyroskop-Gyrometer (72-74) mit einer ersten Messvorrichtung (87-89) versehen ist, die ein erstes Analogsignal liefert, das der Winkelgeschwindigkeit um die Roll- oder Nickachse proportional ist, wobei das zweite Messsystem (7) mit zwei zweiten Messvorrichtungen (92, 93) versehen ist, die jeweils zwischen einem Pendel (90, 91) und der Basis (81-83) angeordnet sind und ein zweites Analogsignal liefern, das proportional zum Neigungswinkel des Pendels (90, 91) in Bezug auf eine scheinbare Vertikale des Luftfahrzeugs (50) ist.

16. System (1) nach Anspruch 15,
**dadurch gekennzeichnet, dass** jedes Gyroskop-Gyrometer (72-74) eine Basis (81-83) und einen Elektromotor (75-77) umfasst, der zwei koaxiale und gegenläufige Schwungräder (78-80) antreibt, wobei eine Drehachse des Elektromotors (75-77) senkrecht zu der Achse verläuft, die der von dem Gyroskop-Gyrometer (72-74) gemessenen Winkelgeschwindigkeit entspricht, wobei der Elektromotor (75-77) mit der Basis (81-83) durch eine schwenkbare Verbindung verbunden ist, die senkrecht zu der Achse, die der gemessenen Winkelgeschwindigkeit entspricht, und senkrecht zu der Drehachse des Elektromotors (75-77) angeordnet ist, wobei die Gyroskop-Gyrometer (72-74) mit einer ersten Messvorrichtung (87-89) versehen sind, die zwischen dem Elektromotor (75-77) und der Basis (81-83) angeordnet ist und ein erstes analoges Signal liefert, das proportional zu der Winkelgeschwindigkeit ist.

17. System (1) nach einem der Ansprüche 13 bis 16,
**dadurch gekennzeichnet, dass** die Hilfsmesskette (20) des Luftfahrzeugs (50) autonom und unabhängig durch mindestens eine elektrische Energiequelle (58) mit Strom versorgt ist.

18. Sicherungsanordnung (40) zur Überwachung der Position eines Luftfahrzeugs (50) in Bezug auf ein genehmigtes Fluggebiet, umfassend:
- mindestens eine Hauptmesskette (10), die einen ersten Wert von mindestens einer Flugeigenschaft des Luftfahrzeugs (50) misst,
- ein Flugsteuerungssystem (2), das die Autopilotsteuerung des Luftfahrzeugs (50) gewährleistet, und
- ein Sicherungssystem zur Überwachung (1) der Position eines Luftfahrzeugs (50) in Bezug auf das genehmigte Fluggebiet,
**dadurch gekennzeichnet, dass** das Sicherungssystem (1) einem der Ansprüche 13 bis 17 entspricht.

19. Luftfahrzeug (50) mit:
- mindestens einem Hubrotor (55),
- mindestens einer Hauptmesskette (10), die einen ersten Wert von mindestens einer Flugeigenschaft des Luftfahrzeugs (50) misst, und
- einem Flugsteuerungssystem (55), das die Autopilotsteuerung des Luftfahrzeugs (50) gewährleistet,
**dadurch gekennzeichnet, dass** das Luftfahrzeug (50) ein Sicherungssystem (1) zur Überwachung einer Position eines Luftfahrzeugs (50) in Bezug auf das genehmigte Fluggebiet nach einem der Ansprüche 13 bis 17 umfasst.

20. Luftfahrzeug (50) nach Anspruch 19,
**dadurch gekennzeichnet, dass** das Luftfahrzeug (50) ein Multirotor-UAV ist, das mindestens zwei Hubrotoren (55) umfasst.

## Claims

1. Safe method for controlling a position of an aircraft (50) in relation to an authorised flight envelope, said method comprising the following steps:
- measuring (110) a first value of at least one flight characteristic of said aircraft (50) via a main measurement chain (10) of said aircraft (50), said at least one flight characteristic being used by a flight control system (2) of said aircraft (50) to automatically pilot said aircraft (50) in the authorised flight envelope,
- emitting (120) at least one analogue signal which is a function of said at least one flight characteristic of said aircraft (50) via an analogue backup measurement chain (20) of said aircraft (50),
- applying a first autopilot mode (140) of said aircraft (50), the application being carried out by default by said flight control system (2) by using said first value of at least one flight characteristic of said aircraft (50) to automatically pilot said aircraft (50),
the method being **characterised by** the following steps:
- applying a second autopilot mode (150) of said aircraft (50), the application being carried out by said flight control system (2) by using said at least one analogue signal to automatically pilot said aircraft (50) as soon as at least one of said at least one flight characteristic of said aircraft (50) exceeds a predetermined limit or as soon as at least one difference between said first value of a flight characteristic and a second value of said flight characteristic determined from of said analogue signal is greater than or equal to a predetermined value, in order to maintain the aircraft (50) in the authorised flight envelope or bring said aircraft back into said envelope.

2. Method according to claim 1,
**characterised in that** said at least one analogue signal comprises at least one analogue pilot signal and at least one analogue switchover signal, said at least one analogue pilot signal being dedicated to the second autopilot mode (150) of said aircraft (50) and said at least one analogue switchover signal being dedicated to a comparison of said at least one flight characteristic of said aircraft (50) with respect to said predetermined limit of said authorised flight envelope or to a comparison of said first value of a flight characteristic and a second value of said flight characteristic determined from said analogue signal.

3. Method according to either claim 1 or claim 2,
**characterised in that** said at least one flight characteristic comprises roll and pitch trim angles of said aircraft (50) about a roll axis and about a pitch axis, respectively, of said aircraft (50).

4. Method according to claim 3,
**characterised in that** said emission step (120) is carried out using the following steps:
- generating at least two analogue signals by at least two gyroscope rate gyros (72-74) arranged along said pitch and roll axes, respectively,
- determining angular velocities of said aircraft (50) about said pitch and roll axes from said at least two analogue signals, and
- determining said trim angles by integrating said angular velocities.

5. Method according to either claim 3 or claim 4,
**characterised in that** said emission step (120) is carried out using the following steps:
- generating at least two analogue signals as a function of respective angles of inclination of at least two pendulums (90, 91) relative to an apparent vertical of said aircraft (50) about said pitch and roll axes, respectively, said pendulums (90, 91) oscillating about said pitch and roll axes, respectively, and on either side of the apparent vertical of said aircraft (50),
- determining said angles of inclination of said pendulums (90, 91) from said at least two analogue signals, and
- determining said trim angles of said aircraft (50) that are equal to said angles of inclination of said pendulums (90, 91).

6. Method according to claim 3,
**characterised in that** said emission step (120) is carried out using the following steps:
- generating at least two analogue signals by at least two gyroscope rate gyros (72-74) arranged along said pitch and roll axes, respectively,
- determining (122) angular velocities of said aircraft (50) about said pitch and roll axes from said at least two analogue signals,
- generating at least two analogue signals as a function of respective angles of inclination of at least two pendulums (90, 91) relative to an apparent vertical of said aircraft (50) about said pitch and roll axes, respectively, said pendulums (90, 91) oscillating about said pitch and roll axes, respectively, and on either side of the apparent vertical of said aircraft (50), and
- determining said angles of inclination of said pendulums (90, 91) from said at least two analogue signals, and
- determining said trim angles by hybridisation of the integrals of said angular velocities of said aircraft (50) about said pitch and roll axes and of said angles of inclination of said pendulums (90, 91) in order to determine said trim angles.

7. Method according to either claim 5 or claim 6,
**characterised in that** said second autopilot mode (150) is provided:
- as soon as an angle of inclination of one of said pendulums (90, 91) is greater than a first threshold, or
- when said angle of inclination of one of said pendulums (90, 91) is greater than a second threshold, said second threshold being less than said first threshold, and when a flight height of said aircraft (50) is less than a critical flight height.

8. Method according to any of claims 1 to 7,
**characterised in that** said at least one flight characteristic comprises the flight height of said aircraft (50).

9. Method according to claim 8,
**characterised in that** said emission step (120) comprises the following steps:
- comparing (131) an atmospheric pressure external to said aircraft (50) with a reference pressure, said reference pressure being equal to an atmospheric pressure at a take-off area of said aircraft (50),
- varying (132) an electrical resistance as a function of a difference between said atmospheric pressure external to said aircraft (50) and said reference pressure, and
- generating (133) an analogue signal that is proportional to said electrical resistance.

10. Method according to any of claims 1 to 9,
**characterised in that** said predetermined limit is equal to an actual limit of said authorised flight envelope of said aircraft (50) to which a safety margin has been added.

11. Method according to any of claims 1 to 10,
**characterised in that** said second autopilot mode (150) is provided when a flight characteristic is greater than a threshold and if a time required for said flight characteristic to return to a value less than or equal to said threshold is greater than a critical time.

12. Method according to any of claims 1 to 11,
**characterised in that**, with said aircraft (50) comprising at least one lift rotor (55) rotated by an electric motor (54), said second autopilot mode (150) comprises a sub-step of controlling a control unit that controls said motor (54) via said at least one analogue signal.

13. Safe control system (1) for controlling a position of an aircraft (50) in relation to an authorised flight envelope, said aircraft (50) comprising:
- at least one main measurement chain (10) that measures a first value of at least one flight characteristic of said aircraft (50), and
- a flight control system (2) that provides said autopilot of said aircraft (50) by using said flight characteristics of said aircraft (50),
**characterised in that** said safe control system (1) is configured to apply said method according to any of claims 1 to 12 and comprises:
- at least one analogue backup measurement chain (20) that supplies at least one analogue signal as a function of said at least one flight characteristic of said aircraft (50), and
- a switchover device (3) configured to transmit, to said flight control system (2), by default said first value, and a second value of said flight characteristic determined from said analogue signal as soon as at least one flight characteristic of said aircraft (50) exceeds a predetermined limit or as soon as at least one difference between said first value and said second value of said flight characteristic is greater than or equal to a predetermined value.

14. System (1) according to claim 13,
**characterised in that** said backup measurement chain (20) comprises a first measurement system (6) for measuring a barometric altitude of said aircraft (50), said first measurement system (6) comprising a closed first chamber (61), a second chamber (62), a piston (63) and a rheostat (60), said closed first chamber (61) containing a fluid at a reference pressure, said second chamber (62) being in contact with an external atmosphere in which said aircraft (50) operates, said piston (63) being arranged between said first and second chambers (61, 62) and moving during a change in an atmospheric pressure of said external atmosphere, said rheostat (60) comprising at least one electrical resistor (66), said rheostat (60) being connected mechanically to said piston (63) and electrically to said switchover device (3), so that said rheostat (60) provides, to said switchover device (3) and/or to said flight control system (2), an analogue signal that varies as a function of the movement of said piston (63).

15. System (1) according to either claim 13 or claim 14,
**characterised in that** said backup measurement chain (20) comprises a second measurement system (7), said second measurement system (7) comprising at least two gyroscope rate gyros (72-74), arranged along roll and pitch axes, respectively, said second measurement system (7) comprising two pendulums (90, 91), each pendulum (90, 91) being connected to a base (81-82) by a pivot type connection about said pitch axis or said roll axis, each gyroscope rate gyro (72-74) being provided with a first measurement device (87-89) supplying a first analogue signal that is proportional to said angular velocity about said roll or pitch axis, said second measurement system (7) being provided with two second measurement devices (92, 93) arranged respectively between a pendulum (90, 91) and said base (81-83) and supplying a second analogue signal that is proportional to the angle of inclination of said pendulum (90, 91) in relation to an apparent vertical of said aircraft (50).

16. System (1) according to claim 15,
**characterised in that** each gyroscope rate gyro (72-74) comprises a base (81-83) and an electric motor (75-77) that drives two coaxial and counter-rotating flywheels (78-80), an axis of rotation of said electric motor (75-77) being perpendicular to said axis corresponding to said angular velocity measured by said gyroscope rate gyros (72-74), said electric motor (75-77) being connected to said base (81-83) by a pivot-type connection arranged perpendicularly to said axis corresponding to said measured angular velocity and perpendicularly to said axis of rotation of said electric motor (75-77), said gyroscope rate gyros (72-74) being provided with a first measurement device (87-89) arranged between said electric motor (75-77) and said base (81-83) and supplying a first analogue signal that is proportional to said angular velocity.

17. System (1) according to any of claims 13 or 16,
**characterised in that** said backup measurement chain (20) of said aircraft (50) is electrically powered autonomously and independently by at least one electric power source (58).

18. Safe control assembly (40) for controlling a position of an aircraft (50) in relation to an authorised flight envelope, comprising:
- at least one main measurement chain (10) that measures a first value of at least one flight characteristic of said aircraft (50),
- a flight control system (2) that provides said autopilot of said aircraft (50), and
- a safe control system (1) for controlling a position of an aircraft (50) in relation to said authorised flight envelope,
**characterised in that** said safe control system (1) is according to any of claims 13 to 17.

19. Aircraft (50) comprising:
- at least one lift rotor (55),
- at least one main measurement chain (10) that measures a first value of at least one flight characteristic of said aircraft (50), and
- a flight control system (55) that provides said autopilot of said aircraft (50), **characterised in that** said aircraft (50) comprises a safe control system (1) for controlling a position of an aircraft (50) in relation to said authorised flight envelope according to any of claims 13 to 17.

20. Aircraft (50) according to claim 19,
**characterised in that** said aircraft (50) is a multirotor drone comprising at least two lift rotors (55).
